(19) Europäisches Patentamt
European Patent Office
Office européen des brevets

(11) **EP 3 041 726 B1**

(12) **EUROPÄISCHE PATENTSCHRIFT**

(45) Veröffentlichungstag und Bekanntmachung des Hinweises auf die Patenterteilung:
**22.11.2023   Patentblatt 2023/47**

(21) Anmeldenummer: **14761952.2**

(22) Anmeldetag: **05.09.2014**

(51) Internationale Patentklassifikation (IPC):
**B60W 50/10** *(2012.01)*    **B60W 30/16** *(2020.01)*
**B60W 30/12** *(2020.01)*    **B60W 50/00** *(2006.01)*
**B60W 50/06** *(2006.01)*

(52) Gemeinsame Patentklassifikation (CPC):
**B60W 30/12; B60W 50/0098; B60W 50/06;**
**B60W 50/10;** B60W 30/16; B60W 2050/0075;
B60W 2050/0088; B60W 2556/10

(86) Internationale Anmeldenummer:
**PCT/EP2014/002414**

(87) Internationale Veröffentlichungsnummer:
**WO 2015/032508 (12.03.2015 Gazette 2015/10)**

(54) **VERFAHREN UND VORRICHTUNG ZUR ANALYSE VON FAHRERASSISTENZSYSTEMEN**

METHOD AND DEVICE FOR ANALYZING DRIVER ASSISTANCE SYSTEMS

PROCÉDÉ ET DISPOSITIF PERMETTANT D'ANALYSER DES SYSTÈMES D'ASSISTANCE AU CONDUCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2013   AT 505552013**

(43) Veröffentlichungstag der Anmeldung:
**13.07.2016   Patentblatt 2016/28**

(73) Patentinhaber: **AVL List GmbH**
**8020 Graz (AT)**

(72) Erfinder:
• **POSCH, Rainer**
  **8010 Graz (AT)**
• **HOLZINGER, Juergen**
  **8054 Graz (AT)**
• **SCHOEGGL, Peter**
  **8151 Hitzendorf (AT)**
• **BOGNER, Erik**
  **8046 Graz (AT)**

(74) Vertreter: **Hahner, Ralph et al**
**Wallinger Ricker Schlotter Tostmann**
**Patent- und Rechtsanwälte Partnerschaft mbB**
**Zweibrückenstraße 5-7**
**80331 München (DE)**

(56) Entgegenhaltungen:
**WO-A1-2012/088635    DE-A1-102011 000 409**
**JP-A- 2008 146 332**

• **BAKO RAJAONAH ET AL: "Trust and the use of adaptive cruise control: a study of a cut-in situation", COGNITION, TECHNOLOGY & WORK, SPRINGER-VERLAG, LO, Bd. 8, Nr. 2, 14. März 2006 (2006-03-14), Seiten 146-155, XP019386882, ISSN: 1435-5566, DOI: 10.1007/S10111-006-0030-3**

**Beschreibung**

Die Erfindung betrifft ein Verfahren und eine Vorrichtung zur Analyse von Fahrerassistenzsystemen.

Die Verbreitung von Fahrerassistenzsystemen (Advanced Driver Assistance Systems - ADAS) nimmt sowohl im Bereich der Personenkraftwagen (PKW) als auch bei Nutzfahrzeugen (NFZ) ständig zu. Fahrerassistenzsystemen leisten wichtige Beiträge zur Erhöhung der aktiven Verkehrssicherheit und dienen der Steigerung des Fahrkomforts. Neben den insbesondere der Fahrsicherheit dienenden Systemen wie ABS (Anti-Blockier-System) und ESP (Elektronisches Stabilitätsprogramm) werden im Bereich der PKW (Personenkraftwagen) und NFZ (Nutzfahrzeuge) eine Vielzahl von Fahrerassistenzsystemen angeboten wie z.B.: Lichtautomatik, Einparkassistent, Tempomat, Fernlichtassistent, Notbremsassistent, Abstandstempomat, Fahrspurassistent, usw. Diese Fahrerassistenzsysteme erhöhen sowohl die Sicherheit im Verkehr, indem sie den Fahrer in kritischen Situationen warnen bis hin zur Einleitung eines selbständigen Eingriffs zur Unfallvermeidung/Folgenminderung (z.B. Notbremsfunktion). Zusätzlich wird der Fahrkomfort durch Funktionen wie automatisches Einparken, automatische Spurhaltung und automatische Abstandskontrolle erhöht.

Der Sicherheits- und Komfortgewinn eines Assistenzsystems wird von den Fahrzeuginsassen nur dann positiv wahrgenommen, wenn die Unterstützung durch das Fahrerassistenzsystem sicher, verlässlich und in - soweit möglich - komfortabler Weise erfolgt.

Bei der Beurteilung dieser Attribute ist zu berücksichtigen, dass die Person am Lenkrad das Assistenzsystem teilweise aus Fahrer-, und teilweise aus Beifahrersicht beurteilt. Die Person am Lenkrad beurteilt Assistenzsysteme aufgrund der eigenen, raschen Eingriffsmöglichkeiten auf Pedale, bzw. Lenkrad zumeist positiver als die Personen auf den Beifahrersitzen. Befragungen von Endkunden ergaben, dass das Sicherheitsempfinden eine relative große Eingewöhnungszeit erfordert, insbesondere wenn sich das Fahrverhalten als eher synthetisch, also nicht als fahrergesteuert darstellt. Es ist wünschenswert, dass das Fahrerassistenzsystem das Verhalten eines idealen Chauffeurs zeigt, insbesondere wenn es sich um Systeme für automatisiertes oder autonomes Fahren handelt, die die Längsgeschwindigkeit selbständig regeln und das Fahrzeug mittels Lenkeingriffen in der Fahrspur halten.

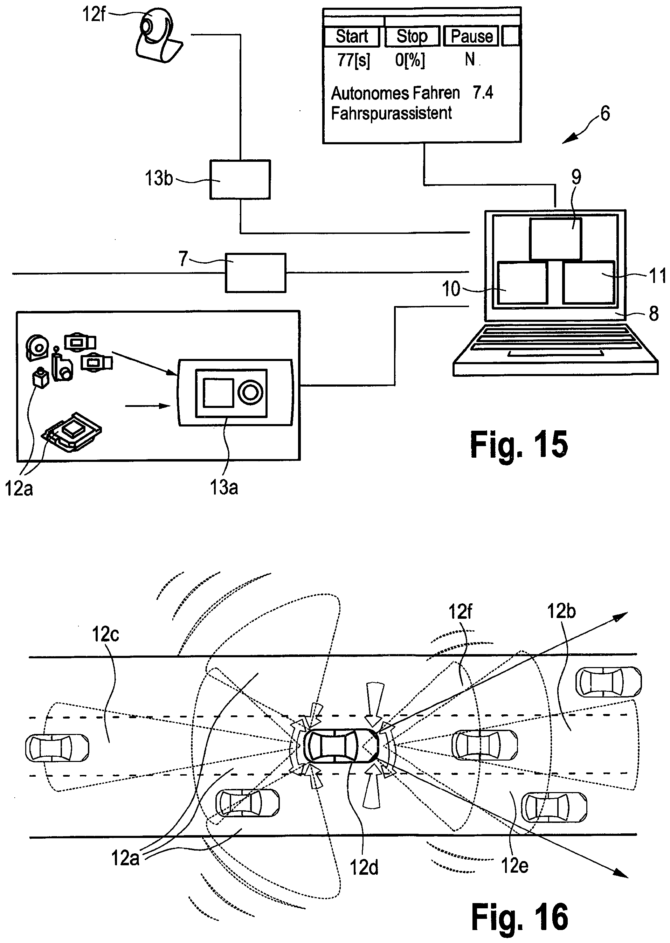

Bei Fahrerassistenzsystemen der neuesten Generation erweitern eine Vielzahl (in manchen Fahrzeugen sind es mehr als 20) Radar-, Video- und Ultraschallsensoren den Blickwinkel des Fahrers auf 360 Grad. Einige dieser Sensoren werden beispielhaft in Fig. 16 dargestellt. Das Spektrum der Unterstützung reicht von der Entlastung und somit Komfortsteigerung über die optische, akustische und/oder haptische Warnung bis zur Verstärkung der Fahrerreaktion. Einige Systeme können im Notfall auch korrigierend eingreifen, etwa durch autonome Bremsmanöver, um einen Unfall zu vermeiden oder die Unfallschwere zu reduzieren.

Aus der Fülle von neuen oder erweiterten Fahrerassistenzsystemen werden im Folgenden die Fahrerassistenz-Funktionen Abstandskontrolle (ACC - Adaptive Cruise Control) und Fahrspurassistent (LKA - Lane Keeping Assistant), als Funktionen zum automatisierten/autonomen Fahren skizziert.

Abstandskontrolle: Der Abstandsregeltempomat entlastet den Fahrer dabei, das eigene Fahrzeug im gewünschten Abstand zu einem vorausfahrenden Fahrzeug zu halten, wenn dieses langsamer als eine vom Fahrer gewählte Wunschgeschwindigkeit fährt. Diese - in der Regel - radarbasierte Grundfunktion wird nun um einen Lenkassistenten Pilot erweitert, der den Fahrer bei der Querführung des Fahrzeugs unterstützt. Indem der Lenkassistent auf gerader Straße und sogar in leichten Kurven ein Lenkmoment erzeugt, das dem Fahrer dabei hilft, in der Mitte der Spur zu bleiben. Durch gezielte Lenkeingriffe kann das System den Fahrkomfort im Geschwindigkeitsbereich bis 210 km/h steigern und den Fahrer in vielen Verkehrssituationen deutlich entlasten. Bei Geschwindigkeiten bis 60 km/h entscheidet dieser sogenannte Stop&Go Pilot dabei intelligent, ob er sich am Vorausfahrzeug oder an den Fahrbahnmarkierungen orientiert, so dass ein teilautonomes Staufolgefahren selbst dann möglich ist, wenn keine oder uneindeutige Fahrbahnmarkierungen sichtbar sind. Das System fasst dafür z.B. die erfassten Daten von Stereokamera und Radarsensoren zusammen, berechnet notwendige Reaktionen und steuert bedarfsgerecht Motorleistung, Getriebe und Bremse für die Längsgeschwindigkeitsregelung sowie die elektrische Lenkung für die Querregelung des Fahrzeugs.

Beispielsweise können durch die Kombination von Radar und Kamera auch einscherende Fahrzeuge, Vorausfahrzeuge und deren Vorausfahrzeuge auf der eigenen und den Nebenspuren erkannt und frühzeitig auf diese reagiert werden. Damit kann zum Beispiel das in Deutschland nicht erlaubte Rechts-Überholen auf Autobahnen und autobahnähnlichen Bundesstraßen vermieden werden, indem oberhalb von 85 km/h die Geschwindigkeit auf Fahrzeuge auf der linken Fahrspur moderat eingeregelt wird, insbesondere bei sich auflösenden Staus und Kolonnenverkehr. Bei niedrigeren Geschwindigkeiten ist ein dann erlaubtes Rechts-Überholen mit einer maximalen Differenzgeschwindigkeit von 20 km/h möglich.

Fahrspurassistent: Aktive Fahrspurassistenten können z.B. bei unbeabsichtigtem Überfahren einer unterbrochenen Linie eingreifen, wenn die Nachbarspur belegt ist und dadurch beim Spurwechsel Kollisionsgefahr entstehen kann. Das System erkennt dies anhand der Informationen einer Stereokamera und des Radarsystems, welches einen Hecksensor aufweist, der in Kombination mit den weiteren Sensoren im vorderen und hinteren Stoßfänger wirksam ist. Kritische Situationen, die von aktiven Fahrspurassistenten erkannt werden können, sind z.B. überholende oder zu überholende Fahrzeuge oder Parallelverkehr; das System ist aber auch bei Gegenverkehr wirksam. Bei erkannter belegter Nachbarspur warnt das System den Fahrer beim Überfahren der Fahrbahnmarkierung nicht nur haptisch durch gepulste Lenkradvibrationen, sondern korrigiert auch beim Überfahren unterbrochener Linien mit einem einseitigen Bremseingriff über ESP die Spur. Der Fahrspurassistent ergänzt somit einen aktiven Totwinkel-Assistenten und ermöglicht die Vermeidung der oft folgenschweren Kollisionen im Gegenverkehr.

Der aktive Fahrspurassistent ist z.B. im Geschwindigkeitsbereich von 60 - 210 km/h aktiv. Wird eine Fahreraktivität erkannt, z. B. durch Lenken, Bremsen oder Beschleunigen sowie bei Betätigen des Blinkers, werden die Warnung und der spurkorrigierende Bremseingriff unterdrückt.

Abstandskontrolle und Fahrspurassistent sind jedoch nur zwei Beispiele bekannter Fahrerassistenzsysteme, zu denen ständig neu entwickelte Fahrerassistenzsysteme hinzukommen. Weitere bekannte Beispiele werden in der DE 10 2011 121 537 A1 (Pausenempfehlung für den Fahrer), der DE 10 2012 002 333 A1 (Fahrlichtverteilung), der DE 10 2012 201 896 A1 (Verschneite Straßen), der DE 10 2012 001 666 A1 (Lenkassistenzsystem) und der DE 10 2011 087 781 A1 (Verminderung von Unfallschäden) beschrieben.

Die Entwicklung geht hin zu Fahrerassistenzsystemen, die einerseits unfallfreies und komfortables Fahren und andererseits teil- und hochautomatisiertes oder sogar autonomes Fahren ermöglichen. Der Entwicklungsaufwand der Fahrerassistenzsysteme ist sehr groß, da die Systeme einschließlich aller verwendeten Sensoren entwickelt, in die Fahrzeugelektronik integriert, kalibriert, sowie z.B. in HIL (Hardware in the Loop) Umgebungen und im Auto unter allen möglichen Umweltbedingungen getestet werden müssen.

DE 10 2011 000409 A1 betrifft ein Verfahren zum Bewerten der fahrdynamischen Ausprägung eines mit einem Kraftfahrzeug realisierten Fahrprofils, womit eine subjektive Wahrnehmung eines Fahrers als Reaktion auf das Fahrprofil eines Fahrerassistenzsystems vorhergesagt werden kann. Dabei wird ein erster Fahrversuch mit Probanden hinsichtlich der fahrdynamischen Ausprägung durchgeführt und die für das vorgegebene Fahrprofil relevanten Parameter statistisch ermittelt. Daraus wird ein Dynamikfaktor erzeugt, der die fahrdynamische Ausprägung kennzeichnet, d.h. ausgehend von einem bestimmten Fahrprofil, welches durch dynamische Bewegungsgrößen sowie Fahrzeugzustandsdaten und einem Streckenprofil bestimmt ist, werden die die fahrdynamischen Ausprägungen charakterisierenden Werte errechnet und abgelegt. Mit Daten eines zweiten Fahrversuchs, in dem Probanden eine subjektive Bewertung hinsichtlich der fahrdynamischen Ausprägung bei verschiedenen Fahrprofilen abgeben, wird eine Korrelation zu dem Dynamikfaktor hergestellt.

WO 2012/088635 A1 betrifft ein adaptives Tempomatsystem und ein Verfahren für ein Fahrzeug. Das System enthält eine Auswahleinheit für einen adaptiven Fahrmodus, die zum Auswählen verschiedener adaptiver Fahrmodi verwendet wird; eine Datensammeleinheit, die zum Sammeln einer Fahrzeugzustandsvariablen x(t) verwendet wird, die angewendet wird, um die Fahrzeuggeschwindigkeit und den Fahrzeugabstand zu steuern. Ferner enthält das System eine Steuereinheit, die zum Erzeugen einer Fahrzeugsteuervariablen u(t) basierend auf der gesammelten Fahrzeugzustandsvariablen x(t) verwendet wird. Das System enthält ferner eine Bewertungseinheit, die zum Bewerten der Steuerwirkung basierend auf der von der Datenerfassungseinheit (103) gesammelten Fahrzeugzustandsvariablen x(t) und der von der Steuereinheit (1022) erzeugten Steuervariablen u(t) verwendet wird, und zum Veranlassen, dass die Bewertungseinheit und die Steuereinheit online studieren, wenn das Bewertungsergebnis zeigt, dass der Steuereffekt die Anforderung nicht erfüllt. Weiterhin enthält das System eine Drosselsteuereinheit und eine Bremssteuereinheit, die ein dynamisches inverses Fahrzeugmodell verwenden, um jeweils eine Drossel und eine Bremse basierend auf der von der Steuereinheit ausgegebenen Steuervariablen u(t) zu steuern.

Für die Entwicklung und Absicherung von Assistenzsystemen ist daher eine Vielzahl von Testfahrten mit unterschiedlichen Fahrern nötig. Da beim autonomen Fahren alle Insassen Beifahrer des Fahrerassistenzsystems sind, ist es sehr wichtig, sämtlichen Insassen in allen Fahrsituationen eine hohe subjektiv empfundene Sicherheit zu vermitteln.

Des Weiteren müssen alle Fahrerassistenzsysteme in Abhängigkeit der jeweiligen Kundenerwartungen auf das Fahrzeugmodell spezifisch angepasst und abgestimmt werden. Zusätzlich muss auch die erwartete Fahrcharakteristik (sportlich, komfortabel, etc.) abgebildet sein. Dies erfordert einen beträchtlichen Entwicklungsaufwand, da sich Fahrerassistenzsysteme in der Regel komplexer Technik bedienen und untereinander über das fahrzeuginterne Netzwerk (z.B. CAN) verbunden und teilweise auch funktional aneinander gekoppelt sind.

Objektivierte Bewertungen des Fahrbarkeitsempfindens sind wesentlich schwieriger als die Bestimmung von z.B. des Kraftstoffverbrauchs oder der Schadstoffemission. Die EP 0 836 945 A1 offenbart hierzu ein Verfahren, um das Fahrverhalten eines Fahrzeugs in Abhängigkeit von Fahrzuständen zu analysieren.

Bei der Entwicklung und Kalibrierung von Fahrerassistenzsystem in Fahrzeugen stehen die empfundene Fahrqualität, die empfundene Sicherheit und die empfundene Beanspruchung des Fahrzeugs und der Fahrzeugkomponenten im Vordergrund, was die Entwickler von Fahrerassistenzsystemen aufgrund der Komplexität der Systeme und der jeweiligen subjektiven Außenwahrnehmung durch die Fahrzeuginsassen vor große Herausforderungen stellt.

Eine Aufgabe der Erfindung ist es, ein Verfahren und eine Vorrichtung bereitzustellen, um ein Fahrerassistenzsystem mit geringem Aufwand, insbesondere wenig Versuchszeit und vertretbaren Kosten zu optimieren.

Zur Lösung der Aufgabe wird ein Verfahren nach Anspruch 1 vorgeschlagen sowie ein Computerprogramm nach Anspruch 21 und ein computer-lesbares Medium nach Anspruchs 22. Eine entsprechende Vorrichtung wird in Anspruch 23 und ein Fahrzeug in Anspruch 24 unter Schutz gestellt. Vorteilhafte Ausgestaltungen der Erfindung werden in den Unteransprüchen beansprucht.

Das erfindungsgemäße Verfahren zur Analyse wenigstens eines Fahrerassistenzsystems A, weist dabei vorzugsweise die folgenden Arbeitsschritte auf: Festlegung wenigstens eines zu optimierenden Fahrerassistenzsystems A und/oder prüfen, ob das wenigstens eine Fahrerassistenzsystem A aktiviert ist; Ermitteln oder Erfassen wenigstens einer Fahrzeugparameterfunktion, welche geeignet ist, einen Betriebszustand eines Fahrzeugs zu charakterisieren, und/oder wenigstens einer Umgebungsparameterfunktion, welche geeignet ist, die Umgebung des Fahrzeugs zu charakterisieren, Berechnen oder Bestimmen wenigstens einer Fahrsituationskennwertfunktion, welche eine Fahrsituationen des Fahrzeugs charakterisiert, und zwar wenigstens auf der Grundlage der wenigstens einen Fahrzeugparameterfunktion und/oder der wenigstens einen Umgebungsparameterfunktion; Berechnen oder Erfassen wenigstens einer Steuereingriffskennwertfunktion, welche geeignet ist, die Aktivität des wenigstens einen Fahrerassistenzsystems A zu charakterisieren, wobei die Aktivität aus dem wenigstens einen erfassten Fahrzeugparameter und/oder dem wenigstens einen erfassten Umgebungsparameter abgeleitet oder über eine Schnittstelle zu dem Fahrerassistenzsystem A ausgelesen oder durch Überwachung einer von dem Fahrerassistenzsystem A geregelten Größe bestimmt wird; und Berechnen oder Bestimmen einer Korrekturfunktion, welche von der wenigstens einen Fahrsituationskennwertfunktion abhängt und insbesondere geeignet ist, eine subjektive Wahrnehmung der Fahrsituation und/oder der Aktivität des Fahrerassistenzsystems A durch zumindest einen Fahrzeuginsassen zu charakterisieren, und zwar wenigstens auf der Grundlage der wenigstens einen Steuereingriffskennwertfunktion und auf der Grundlage der wenigstens einen Fahrzeugparameterfunktion und/oder der wenigstens einen Umgebungsparameterfunktion.

Die erfindungsgemäße Vorrichtung zur Analyse eines Fahrerassistenzsystems, weist wenigstens einen Umgebungssensor zum Erfassen, insbesondere zur Messung, eines Umgebungsparameters, welcher die Umgebung des Fahrzeugs charakterisiert, und wenigstens einen Fahrzeugsensor zum Erfassen, insbesondere zur Messung, eines Fahrzeugparameters, welcher einen Betriebszustand eines Fahrzeugs charakterisiert, auf. Die Vorrichtung weist des Weiteren ein erstes Modul, welches eingerichtet ist, auf der Grundlage wenigstens eines Umgebungsparameters und/oder eines Fahrzeugparameters einen Fahrsituationskennwert zu bestimmen oder zu berechnen, welcher geeignet ist, eine Fahrsituation des Fahrzeugs zu charakterisieren, und ein zweites Modul, welches geeignet ist eine Aktivität des Fahrerassistenzsystems zu überwachen und daraus einen Steuereingriffskennwert zu bestimmen oder zu berechnen, welcher geeignet ist, die Aktivität des Fahrerassistenzsystems zu charakterisieren, wobei die Aktivität aus dem Fahrzeugparameter und/oder dem Umgebungsparameter abgeleitet oder über eine Schnittstelle zu dem Fahrerassistenzsystem ausgelesen oder durch Überwachung einer von den Fahrerassistenzsystem A geregelten Größe bestimmt wird, sowie ein drittes Modul, welches eingerichtet ist, um auf der Grundlage wenigstens eines Umgebungsparameters und/oder wenigstens eines Fahrzeugparameters in Abhängigkeit von dem Fahrsituationskennwert und des Steuereingriffskennwerts einen Korrekturwert zu bestimmen oder zu berechnen, welcher geeignet ist, eine subjektive Außenwahrnehmung der Fahrsituation und/oder der Aktivität des Fahrerassistenzsystems durch zumindest einen Fahrzeuginsassen zu charakterisieren, auf.

Durch das erfindungsgemäße Verfahren können bei komplexen Fahrerassistenzsysteme, wie beispielsweise Abstandskontrolle und Fahrspurassistent, die teilautomatisiertes Fahren bis hin zum hochautomatisierten oder sogar autonomes Fahren ermöglichen, das subjektive Empfinden und das Sicherheitsgefühl der Insassen objektiv messbar und bewertbar gemacht werden, um dann wieder in die Entwicklung bzw. Optimierung des Fahrerassistenzsystems einzufließen.

Bei dem erfindungsgemäßen Verfahren können sowohl Fahrzeugparameter als auch Umgebungsparameter erfasst werden. Hierdurch wird eine umfassende Darstellung der Fahrsituation des Fahrzeugs ermöglicht, die eine Charakterisierung im Hinblick auf die Wahrnehmung eines Fahrzeuginsassen erlaubt. Dabei können bei der Berechnung der Korrekturfunktion sowohl Fahrzeugparameter als auch Umgebungsparameter einfließen. Durch die Berechnung einer Steuereingriffskennwertfunktion wird die Aktivität des Fahrerassistenzsystems bei der Berechnung der Korrekturfunktion berücksichtigt. Dies ist beispielsweise bei der Charakterisierung des Fahrerassistenzsystems im Hinblick auf die Sicherheitsempfindung eines Insassen von Vorteil, da nicht nur die subjektive Wahrnehmung der Fahrsituation, sondern auch gerade die Reaktion des Fahrerassistenzsystems auf diese Fahrsituation einen wesentlichen positiven oder negativen Beitrag zur Sicherheitsempfindung des Insassen verursacht.

Insbesondere bietet das Verfahren auch die Möglichkeit, bei der Berechnung der Korrekturfunktion bzw. eines Korrekturwerts zusätzlich oder ausschließlich andere Parametern zu berücksichtigen als jene, die zur Bestimmung der Fahrsituation herangezogen werden.

Die automatische Fahrsituationserkennung und die Ermittlung der Außenwahrnehmung der Fahrsituation auf den Fahrzeuginsassen ermöglichen eine deutlich raschere Analyse von Messdaten, sowie eine zielgerichtete, effiziente Abstimmung von diesen Fahrerassistenzsystemen. Zudem ermöglicht das objektive Bewertungsverfahren auch die Optimierung von Fahrerassistenzsystemen durch eine Simulation, d.h. in virtueller Umgebung oder im Prüffeld.

Mit der objektivierten Bewertung von Fahrerassistenzsystemen schafft man daher die wichtige Möglichkeit, die Auslegung der Funktionalität der Systeme im Fahrzeug in die virtuelle Entwicklungsphase vorzuverlegen, um die Optimierung der Systeme bereits in frühen Phasen durchzuführen.

Der Begriff Fahrerassistenzsystem (FAS - englisch: Advanced Driver Assistance Systems (ADAS)) im Sinne der Erfindung umfasst jegliche Art von elektronischer Zusatzeinrichtungen in Kraftfahrzeugen zur Unterstützung des Fahrers in bestimmten Fahrsituationen.

Ein Betriebszustand eines Fahrzeugs im Sinne der Erfindung wird durch jene Eigenschaften charakterisiert, welche das Fahrzeug an sich und nicht dessen Umgebung betreffen. Betriebsparameter sind vorzugsweise physikalische Parameter oder messbare Größen, welche geeignet sind den Betriebszustand des Fahrzeugs zu charakterisieren. Beispiele für Parameter zur Charakterisierung des Betriebszustands sind Geschwindigkeit, Drehzahl, Drehmoment, Beschleunigung, etc.

Ein Fahrzeug im Sinne der Erfindung ist ein mobiles Verkehrsmittel, das dem Transport von Gütern (Güterverkehr), Werkzeugen (Maschinen oder Hilfsmittel) oder Personen (Personenverkehr) dient. Bevorzugt handelt es sich hierbei um ein Kraftfahrzeug, welches sich auf der Erdoberfläche bewegt.

Eine Fahrsituation im Sinne der Erfindung setzt sich aus dem Betriebszustand des Fahrzeugs und/oder der erfassten Umgebung bzw. Umwelt des Fahrzeugs zusammen. Insbesondere handelt es sich dabei um den dynamischen Gesamtzustand des Fahrzeugs und der jeweiligen Umgebung bzw. in der jeweiligen Umgebung. Vorzugsweise wird eine Fahrsituation durch wenigstens einen Betriebsparameter des Fahrzeugs und/oder durch wenigstens einen Umgebungsparameter definiert.

Eine Umgebung im Sinne der Erfindung ist die durch andere Verkehrsteilnehmer, das Gelände und die Witterung vorgegebene Umwelt eines Fahrzeugs. Umgebungsparameter sind vorzugsweise physikalische Parameter oder messbare Größen, welche geeignet sind, die Umgebung des Fahrzeugs zu charakterisieren, z.B. der Abstand zum vorausfahrenden Fahrzeug, dessen Geschwindigkeit etc.

Eine Aktivität eines Fahrerassistenzsystems im Sinne der Erfindung ist jegliches Eingreifen oder bei entsprechenden Fahrsituationen auch das Unterlassen des Eingreifens in die Steuerung eines Fahrzeugs. Die Aktivität kann über eine Schnittstelle mit dem Fahrerassistenzsystem oder vorzugsweise durch Überwachung einer von dem Fahrerassistenzsystem geregelten Größe, beispielsweise dem Lenkwinkel bei einem Spurhalteassistenten, bestimmt werden. Vorzugsweise wird die Aktivität und damit die Steuereingriffsfunktion nur dann bestimmt, wenn das Fahrerassistenzsystem A aktiviert ist. Eine logische Verknüpfung von Aktivität und Aktivierung des Fahrerassistenzsystems A ist insbesondere dann vorteilhaft, wenn die Steuereingriffsfunktion von einem Fahrzeugparameter oder einem Umgebungsparameter abhängt.

Als Wahrnehmung im Sinne der Erfindung wird die physiologische Wahrnehmung eines Fahrzeuginsassen mit seinen Sinnesorganen bezeichnet. Dies bedeutet z.B. die Wahrnehmung des Abstands zum vorausfahrenden Fahrzeug, das Aufleuchten von dessen Bremsleuchten, aber auch z.B. die Verzögerung des Fahrzeugs selbst, in dem der Insasse sitzt. Eine Funktion im Sinne der Erfindung ist eine Zuordnung von wenigstens einem Parameterwert zu einem anderen Parameterwert, beispielsweise eines Geschwindigkeitswerts zu einem Zeitpunkt. Vorzugsweise ist eine Funktion dabei ein Verlauf eines Parameters oder eines Funktionswerts in Abhängigkeit von der Zeit und/oder einer Position.

Erfassen im Sinne der Erfindung ist ein Aufnehmen, Einlesen, Messen oder Ableiten.

Bestimmen im Sinne der Erfindung ist ein Bestimmen aus einer Zuordnung oder ein Berechnen.

Eine Korrekturfunktion im Sinne der Erfindung ist eine eindeutige Zuordnung, insbesondere eine Funktion, welche auch durch eine Matrix (zweidimensional Tabelle) abgebildet sein kann. Vorzugsweise beschreibt diese den Zusammenhang zwischen gemessenen oder berechneten bzw. durch Simulation gewonnenen physikalischen Parametern, die den Fahrzeug- und Umgebungszustand und ggf. deren Änderung über die Zeit kennzeichnen, und der physiologischen Empfindung wenigstens eines Fahrzeuginsassen. Der Funktionswert der Korrekturfunktion hängt hierbei von der Fahrinsassen und der erfassten Aktivität des Fahrerassistenzsystems A ab. Des Weiteren hängt der Funktionswert von wenigstens einem Fahrzeugparameter und/oder wenigstens einem Umgebungsparameter ab. Der Begriff Korrekturfunktion wird deshalb verwendet, da sich damit - falls eine entsprechende Referenz zur Verfügung steht - der Abstand zu einem als optimal angesehenen Verhalten ermitteln lässt. Das Ergebnis der Bestimmung bzw. Berechnung der Korrekturfunktion kann selbst wieder eine Funktion darstellen oder eine Gruppe von Korrekturwerten oder aber auch einen einzelnen Korrekturwert. Das Ergebnis kann dann mit der Referenz, insbesondere einer Referenzfunktion, weiter insbesondere Referenzwerten, verglichen werden. Im letzteren Fall kann das Ergebnis der Berechnung der Korrekturfunktion z.B. einen Punktwert zwischen 0 und 10 ergeben, wobei die 10 dann den Optimalwert bedeuten kann.

In einer vorteilhaften Ausgestaltung des Verfahrens hängt die wenigstens eine Steuereingriffskennwertfunktion von der Fahrsituationskennwertfunktion ab und/oder wird ebenfalls auf der Grundlage der wenigstens einen Fahrzeugparameterfunktion und/oder der wenigstens einen Umgebungsparameterfunktion berechnet.

Durch diese Ausgestaltung kann eine Aktivität des Fahrerassistenzsystems ohne Zugriff auf Daten des Fahrerassistenzsystems erfasst werden. Weiterhin können die Kriterien, welche zur Bestimmung des Steuereingriffs dienen von der jeweiligen Fahrsituation abhängen, so dass jeder Steuereingriff bzw. jede Aktivität des Fahrerassistenzsystems optimal detektiert werden kann.

In einer weiteren vorteilhaften Ausgestaltung des Verfahrens hängt die wenigstens eine Steuereingriffskennwertfunktion und/oder die Korrekturfunktion des Weiteren von dem zu charakterisierenden Fahrzeugassistenzsystem A ab.

Durch diese Ausgestaltung können für jedes einzelne zu charakterisierende Fahrzeugassistenzsystem passende Kriterien vordefiniert werden, die beim Ausführen des Verfahrens nur abgerufen werden müssen.

In einer weiteren vorteilhaften Ausgestaltung des Verfahrens hängt die wenigstens eine Fahrzeugparameterfunktion ein Tupel von wenigstens einem gemessenen Fahrzeugparameter ist, welche gegebenenfalls von der Zeit abhängt und wobei die wenigstens eine Umgebungsparameterfunktion ein Tupel von wenigstens einem gemessenen Umgebungsparameter ist, welche gegebenenfalls von der Zeit ab.

In einer weiteren vorteilhaften Ausgestaltung des erfindungsgemäßen Verfahrens weist die Fahrzeugparameterfunktion, die Umgebungsparameterfunktion, die Steuereingriffskennwertfunktion und/oder die Korrekturfunktion jeweils ein Parameterwertepaar auf, wobei einer der Parameterwerte insbesondere die Zeit oder die Position eines Fahrzeugs mit dem Fahrerassistenzsystem ist.

In einer weiteren vorteilhaften Ausgestaltung des Verfahrens ist bei der Berechnung der Korrekturfunktion und/oder der Steuereingriffskennwertfunktion und bei der Berechnung der Fahrsituationsparameterfunktion zumindest ein Fahrzeugparametern und/oder zumindest ein Umgebungsparameter verschieden.

In einer weiteren vorteilhaften Ausgestaltung des Verfahrens hängt die Korrekturfunktion zusätzlich von Fluktuationen zumindest eines Fahrzeugparameters, zumindest eines Umgebungsparameters und/oder der zumindest einen Steuereingriffskennwertfunktion ab.

Durch diese Ausgestaltung können störende Fluktuationen bzw. Schwankungen berücksichtigt werden, die beispielsweise durch das Fahrerassistenzsystem A selbst verursacht werden.

Die wenigstens eine Steuereingriffskennwertfunktion wird durch ein Vorliegen eines Steuereingriffs und/oder eine Intensität des Steuereingriffs des Fahrerassistenzsystems charakterisiert.

In einer weiteren vorteilhaften Ausgestaltung des Verfahrens hängt die wenigstens eine Steuereingriffskennwertfunktion von wenigstens einem Kriterium aus der Gruppe der folgenden Kriterien ab: die Abschaltschwelle, die Ausstiegshäufigkeit, die Reaktion auf das Vorausfahrzeug, die Reaktion auf eine Fahrspurabweichung, die Reaktion auf eine Fahrsituationsänderung, die Reaktion auf eine Abstandsabweichung, die Reaktionszeit, die Ansprechverzögerung und die Erfassungsdauer für ein Objekt des Fahrerassistenzsystems A.

In einer weiteren vorteilhaften Ausgestaltung des Verfahrens wird, wenn sich die wenigstens eine Fahrsituationskennwertfunktion nicht ändert, die Korrekturfunktion jeweils periodisch, insbesondere für ein Zeitintervall von maximal etwa 10s, bevorzugt maximal etwa 5s berechnet.

Die periodische Berechnung eines Korrekturwerts der Korrekturfunktion gemäß dieser Ausgestaltung ermöglicht eine sinnvolle diskrete Bewertung eines gesamten Fahrzyklus, da kleine Messschwankungen durch das Bilden von Zeitintervallen ausgeglichen werden.

In einer weiteren vorteilhaften Ausgestaltung des Verfahrens wird, wenn sich die wenigstens eine Fahrsituationskennwertfunktion während eines Zeitintervalls ändert, die Korrekturfunktion für den Zeitraum des vorhergehenden Fahrsituationskennwerts bzw. Fahrsituation seit der letzten periodischen Berechnung berechnet und eine periodische Berechnung der Korrekturfunktion für den nachfolgenden Fahrsituationskennwert bzw. Fahrsituation gestartet.

Die weitere Unterteilung eines Fahrzyklus gemäß dieser Ausgestaltung ermöglicht es, dass ein Korrekturwert der Korrekturfunktion immer für ein Zeitraum berechnet wird, in welchem auch der gleiche Fahrzustand vorlag, dessen Werte mithin vergleichbar sind.

In einer weiteren vorteilhaften Ausgestaltung des Verfahrens kann die wenigstens eine Fahrsituationskennwertfunktion als Kennwert zumindest eine Fahrsituation aus der Gruppe folgender Fahrsituationen annehmen: Folgen bei konstanter Geschwindigkeit, Folgen bei Beschleunigung, Folgen bei Verlangsamen/Bremsen, Folgen bis Fahrzeugstopp, Folgen ab Losfahren, Folgen bei Einscheren, Folgen bei Ausscheren, Folgen bei Stop&Go, Auffahren auf ein langsameres Objekt, freie Beschleunigung, Objektdetektion eines neuen Objektes, freies Fahren, Spurhalten, Spurwechsel, Überholen, Überholt werden, Stau, Stop&Go Verkehr und vorwärts oder rückwärts Einparken. Weitere Fahrsituationen können aus dem Vorliegen von zwei vorgenannten Fahrsituationen entstehen, beispielsweise Spurhalten bei einem Folgen ab Losfahren. Auch diese Fahrsituationen sind Fahrsituationen im Sinne der Erfindung.

In einer weiteren vorteilhaften Ausgestaltung weist das Verfahren des Weiteren folgenden Arbeitsschritt auf: Korrigieren wenigstens eines Fahrsituationskriteriums, welches von dem Fahrerassistenzsystem A zum Steuern des Fahrzeugs verwendet wird, auf der Grundlage des Korrekturwerts der Korrekturfunktion.

In einer weiteren vorteilhaften Ausgestaltung weist das Verfahren des Weiteren einen Arbeitsschritt des Bestimmens einer Bewertungsfunktion, insbesondere eines Bewertungswerts, auf der Grundlage der Korrekturfunktion und einer Referenzfunktion auf. Eine Bewertungsfunktion bzw. ein Bewertungswert, bietet vorzugsweise eine einfach nachvollziehbare Aussage für den Entwickler oder auch Geschäftsleitung.

In einer weiteren vorteilhaften Ausgestaltung weist das Verfahren des Weiteren einen Arbeitsschritt des Gewichtens der Kriterien und/oder Parameter in Abhängigkeit ihres jeweiligen Einflusses auf die subjektive Wahrnehmung des Fahrzeuginsassen und/oder in Abhängigkeit der Art des Fahrzeugs auf. Durch eine solche Gewichtung kann eine optimale Anpassung einer Bewertung an die subjektive Wahrnehmung eines Insassen erreicht werden.

In einer weiteren vorteilhaften Ausgestaltung weist das Verfahren des Weiteren einen Arbeitsschritt des Ausgebens der Korrekturfunktion und/oder der Bewertungsfunktion auf.

In einer weiteren vorteilhaften Ausgestaltung des Verfahrens betrifft die subjektive Wahrnehmung der Aktivität des Fahrerassistenzsystems die Fahrqualität des Fahrerassistenzsystems A, die Fahrsicherheit, die Beanspruchung des Fahrzeugs und/oder die Fahrbarkeit des Fahrzeugs bei Einsatz des Fahrerassistenzsystems A.

In einer weiteren vorteilhaften Ausgestaltung ist die Korrekturfunktion geeignet, einen sicherheitsrelevanten Aspekt in Bezug auf ein Fahrzeug mit dem wenigstens einen Fahrerassistenzsystem zu charakterisieren, insbesondere eine fahrsituationsadäquate Geschwindigkeitsreduzierung, eine fahrsituationsadäquate Bremsverzögerung und/oder einen fahrsituationsadäquaten Lenkeinschlag.

In einer weiteren vorteilhaften Ausgestaltung weist das Verfahrens des Weiteren folgenden Arbeitsschritt aufweist: Vorgeben einer virtuellen Realitätsumgebung, in welcher die wenigstens eine Fahrzeugparameterfunktion, die wenigstens eine Umgebungsparameterfunktion und/oder das Fahrerassistenzsystem A emuliert werden.

Durch das Einbinden von Simulationen / Emulationen in den Charakterisierungsprozess kann das erfindungsgemäße Verfahren schon in einer frühzeitigen Entwicklungsphase eingesetzt werden, was teure Teststunden in einem realen Fahrzeug einspart.

In einer weiteren vorteilhaften Ausgestaltung des Verfahrens weist die wenigstens eine Fahrzeugparameterfunktion zumindest einen Fahrzeugparameter aus der Gruppe umfassend die Fahrgeschwindigkeit, die Gierwinkelgeschwindigkeit, der Lenkwinkel, die Längsbeschleunigung, die Querbeschleunigung, die Beschleunigung in vertikaler Richtung, die Gaspedalstellung, die Bremspedalstellung, die Motordrehzahl, die Gangstufe und der Einschaltzustand des Fahrerassistenzsystems A auf.

In einer weiteren vorteilhaften Ausgestaltung des Verfahrens weist die wenigstens eine Umgebungsparameterfunktion zumindest einen Fahrzeugparameter aus der Gruppe umfassend der Abstand zu zumindest einem anderen Fahrzeug, insbesondere dem Vorderfahrzeug, die Querposition zumindest eines anderen Fahrzeugs, insbesondere des Vorderfahrzeugs, gegenüber dem eigenen Fahrzeug, die Längsposition zumindest eines anderen Fahrzeugs, insbesondere des Vorderfahrzeugs, gegenüber dem eigenen Fahrzeug, die Relativgeschwindigkeit zumindest eines anderen Fahrzeugs, insbesondere des Vorderfahrzeugs, gegenüber dem eigenen Fahrzeug, die Relativbeschleunigung zumindest eines anderen Fahrzeugs, insbesondere des Vorderfahrzeugs, gegenüber dem eigenen Fahrzeug, die Breite zumindest eines anderen Fahrzeugs, insbesondere des Vorderfahrzeugs, die Art zumindest eines anderen Fahrzeugs, insbesondere des Vorderfahrzeugs, die Klasse zumindest eines anderen Fahrzeugs, insbesondere des Vorderfahrzeugs, die Anzahl der Fahrspuren, der Fahrbahnverlauf, der eigene Fahrkorridor bzw. der eigene vorausberechneten Fahrtrajektorie, die Art der Fahrspurbegrenzung, die Breite der Fahrspurbegrenzung, die Krümmung der Fahrbahn, der Gierwinkelfehler, die Fahrspurbreite, die Fahrbahnbreite, die Querabweichung, der Abstand zur linken und/oder rechten Fahrspurbegrenzung, der minimale Abstand zur linken und/oder rechten Fahrspurbegrenzung während eines Fahrzyklus und die Sichtgüte auf.

In einer weiteren vorteilhaften Ausgestaltung des Verfahrens ist der mindestens eine Fahrzeuginsasse der Fahrer, und/oder der Beifahrer und/oder ein Mitfahrer auf dem Rücksitz des Fahrzeugs.

Da jeder Fahrzeuginsasse die Fahrsituation teilweise extrem unterschiedlich wahrnimmt, ist es von Vorteil, gemäß dieser Ausgestaltung das Fahrerassistenzsystem A für jede der Wahrnehmungen der unterschiedlichen Fahrzeuginsassen einzeln und zusammen zu charakterisieren.

In einer weiteren vorteilhaften Ausgestaltung des Verfahrens wird die Berechnung der jeweils wenigstens einen Kennwertfunktionen und der Korrekturfunktion während und/oder nach einer Fahrt oder einer Simulation des Fahrzeugs durchgeführt.

Die zu dem vorstehend beschriebenen Aspekt der Erfindung und den zugehörigen vorteilhaften Ausgestaltungen des Verfahrens offenbarten Merkmale gelten auch für die nachstehend beschriebenen Aspekte der Erfindung und die zugehörigen vorteilhaften Ausgestaltungen der Vorrichtung zur Analyse eines Fahrerassistenzsystems und des Fahrzeugs mit einem Fahrerassistenzsystem entsprechend. Umgekehrt gelten die zu den nachstehend beschriebenen Aspekten der Erfindung und den zugehörigen Weiterbildungen des Vorrichtung zur Optimierung eines Fahrerassistenzsystems und des Fahrzeugs mit einem Fahrerassistenzsystem offenbarten Merkmale auch für den vorstehend beschriebenen Aspekt der Erfindung und die zugehörigen Weiterbildungen des Verfahrens entsprechend.

In einer vorteilhaften Ausgestaltung der Vorrichtung ist der wenigstens eine Umgebungssensor aus der Gruppe vorausschauender Radar und rückschauender Radar, insbesondere Nahbereichsradar, Fernbereichsradar und Multi-Mode-Radar, vorausschauender Lidar (Laser-Entfernungsmessgerät) , rückschauender Lidar, Ultraschallsensor, Infrarotkamera, insbesondere Nah-/Ferninfrarotkamera und Kamera im sichtbaren Spektralbereich bzw. Bildverarbeitungskamera, GPS, insbesondere hochauflösendes GPS ausgewählt.

In einer vorteilhaften Ausgestaltung der Vorrichtung ist der wenigstens eine Fahrzeugsensor aus der Gruppe Gyrometer, Geschwindigkeitsmesser, Beschleunigungssensor, normal- oder hochauflösendes GPS, Vibrationssensor, Höhenmesser, Vermessungseinrichtung, Drehzahlmesser, Drosselklappensensor, Hitzdrahtanemometer, Drehmomentmesser, Schaltsensor, Tankfüllstandssensor Temperatursensor, ausgewählt.

In einer vorteilhaften Ausgestaltung der Vorrichtung hat diese auf Daten aus dem fahrzeuginternen Netzwerk bzw. Netzwerken, insbesondere dem CAN-Bus, Zugriff.

In einer vorteilhaften Ausgestaltung der Vorrichtung werden, soweit vorhanden, Fahrzeugsensoren und Umgebungssensoren benutzt, welche im Fahrzeug serienmäßig verbaut sind.

Beide vorhergehenden Ausgestaltungen reduzieren den Hardwarebedarf für die erfindungsgemäße Vorrichtung, da im Fahrzeug vorhandene Einrichtungen, insbesondere Sensoren und Messaufnehmer, genutzt werden können.

Beispielhafte Ausführungsformen des Verfahrens und/oder der Vorrichtung sowie weitere Vorteile ergeben sich aus der nachfolgenden Beschreibung in Zusammenhang mit den Figuren, welche im Einzelnen darstellen:

Fig. 1 zeigt ein Diagramm, in welchem jeweils der Fahrer (Driver - jeweils linker Balken) und der Beifahrer (Co-Driver - jeweils rechter Balken) verschiedene Kriterien zur Charakterisierung eines Fahrerassistenzsystems nennen;

Fig. 2 zeigt teilweise schematisch die Herleitung eines Bewertungsalgorithmus für eine erfindungsgemäße Korrekturfunktion;

Fig. 3 zeigt teilweise schematisch verschiedene Fahrlinien eines Fahrerassistenzsystems, welche verschiedenen Korrekturwerten der erfindungsmäßen Korrekturfunktion entsprechen;

Fig. 4 stellt teilweise schematisch eine Fahrsituation Folgen bei konstanter Geschwindigkeit dar;

Fig. 5 stellt teilweise schematisch einen Einregelvorgang der Geschwindigkeit eines Fahrerassistenzsystems dar;

Fig. 6 stellt teilweise schematisch ein Diagramm für die Abhängigkeit der Korrekturfunktion von der Ansprechverzögerung AV dar;

Fig. 7 stellt teilweise schematisch den Einfluss der Relativbeschleunigung auf die Korrekturfunktion dar;

Fig. 8 stellt teilweise schematisch den Einfluss des Minimalwerts bzw. des Maximalwerts einer Relativgeschwindigkeit auf eine Korrekturfunktion dar;

Fig. 9 stellt teilweise schematisch eine Abhängigkeit der Korrekturfunktion von dem Abstand zu dem zu folgenden Fahrzeug dar;

Fig. 10 stellt teilweise schematisch einen Zwei-Sekunden-Sicherheitskorridor dar;

Fig. 11 stellt teilweise schematisch einen Verlauf einer Bahnkurve eines Fahrzeugs dar;

Fig. 12 stellt teilweise schematisch den Einfluss der Querabweichung auf die Korrekturfunktion dar;

Fig. 13 stellt teilweise schematisch den Gierwinkelfehler dar;

Fig. 14 stellt teilweise schematisch verschiedene Fahrzeugparameter und Umgebungsparameter dar;

Fig. 15 zeigt teilweise schematisch den Messaufbau einer erfindungsgemäßen Vorrichtung zur Optimierung eines Fahrerassistenzsystems; und

Fig. 16 stellt teilweise schematisch eine Anordnung von Sensoren an einem Fahrzeug dar;

Fig. 17 stellt teilweise schematisch einen Bewertungsbogen zur Erstellung der objektivierten Bewertungskriterien für einen ACC Abstandstempomaten dar;

Fig. 18 stellt teilweise schematisch eine Ansicht eines Verlaufs von Messdaten bzw. erfassten Daten verschiedener Parameter, d.h. verschiedener patentgemäßer Funktionen dar.

Das erfindungsgemäße System betrifft die automatisierte Charakterisierung und Bewertung der Sicherheit und der Fahrqualität eines Fahrerassistenzsystems A anhand von objektivierten subjektiven Wahrnehmungen eines oder mehrerer Fahrzeuginsassen, wodurch das Fahrerassistenzsystem A in wenigstens einem weiteren Schritt optimierbar ist.

Die Methodik zur Objektivierung von subjektiven Eindrücken der Insassen beinhaltet die objektive Bewertung von gemessenen Fahrzeugparametern wie Längsdynamik (Betriebs- und Fahrverhalten von Motor- und Getriebe), Querdynamik (Handling, Lenkung, Fahrwerk), Vertikaldynamik (Fahrwerkskomfort) und Umgebungsparametern. Aus Messgrößen von Sensoren und Steuergeräten wird eine Vielzahl von Fahrsituationen insbesondere unter Anwendung der Fuzzy Logik selbständig erkannt, in Echtzeit physikalisch ausgewertet und vorzugsweise On-Line mit Noten analog dem Subjektivempfinden von Fahrbarkeitsexperten bewertet.

Dies wird am Beispiel der beiden wichtigen Fahrerassistenz-Funktionen Abstandskontrolle und Fahrspurassistent dargestellt. Genauso kann aber jedes andere Fahrerassistenzsystem, das teilautomatisiertes Fahren bis hin zum hochautomatisierten/autonomen Fahren ermöglicht, mittels des erfindungsgemäßen Verfahrens optimiert werden.

Die Fahrzyklen zur Bewertung der jeweiligen Fahrerassistenzsysteme A, hier Abstandskontrolle und Fahrspurassistent, werden dabei bevorzugt miteinander verknüpft, um alle Systeme in einem Fahrzyklus bewerten zu können. Genauso können die jeweiligen Fahrerassistenzsysteme A jedoch auch einzeln geprüft werden.

Rein beispielhaft wird im Folgenden eine Kalibrierungsphase des erfindungsgemäßen Systems beschrieben: Aus umfangreichen Versuchsfahrten von Experten und Fahrzeugendkunden werden für verschiedene Fahrsituationen subjektiv-relevante Kriterien oder Parameter für das zumindest eine zu prüfende Fahrerassistenzsystem A definiert und danach anhand dieser Kriterien bewertet. Fahrsituationen sind hierbei durch Wertebereiche einzelner Fahrzeugparameter oder Umgebungsparameter oder durch Kombinationen von Fahrzeugparametern und Umgebungsparametern definiert. Fahrzeugparameter charakterisieren hierbei einen Betriebszustand eines Fahrzeugs, betreffen also Parameter, die im oder am Fahrzeug bzw. Aggregaten des Fahrzeugs gemessen werden. Umgebungsparameter charakterisieren die Umgebung des Fahrzeugs, also beispielsweise Abstände vom Fahrzeug zu charakteristischen Objekten in der Umgebung, aber auch Umweltgrößen wie die Sonneneinstrahlung oder auch die Temperatur.

Für die vorliegenden Fahrerassistenzsysteme sind als Fahrzeugparameter vorzugweise die Fahrzeuggeschwindigkeit $v_{x1}$, die Gierwinkelgeschwindigkeit, der Lenkwinkel, die Längsbeschleunigung $a_{x1}$, die Querbeschleunigung, die Gaspedalstellung, die Bremspedalstellung, die Motordrehzahl, die Gangstufe und der Einschaltzustand des Fahrerassistenzsystems A vorgesehen. Als Umgebungsparameter sind vorzugsweise der Abstand $D_x$ zu zumindest einem anderen Fahrzeug, insbesondere dem Vorausfahrzeug, die Querposition zumindest eines anderen Fahrzeugs, insbesondere des Vorausfahrzeugs, gegenüber dem eigenen Fahrzeug, die Längsposition zumindest eines anderen Fahrzeugs, insbesondere des Vorausfahrzeugs, gegenüber dem eigenen Fahrzeug, die Relativgeschwindigkeit $v_{rel}$ zumindest eines anderen Fahrzeugs, insbesondere des Vorausfahrzeugs, gegenüber dem eigenen Fahrzeug, die Relativbeschleunigung $a_{rel}$ zumindest eines anderen Fahrzeugs, insbesondere des Vorausfahrzeugs, gegenüber dem eigenen Fahrzeug, die Breite zumindest eines anderen Fahrzeugs, insbesondere des Vorausfahrzeugs, die Art zumindest eines anderen Fahrzeugs, insbesondere des Vorausfahrzeugs, die Klasse zumindest eines anderen Fahrzeugs, insbesondere des Vorausfahrzeugs, die Anzahl der Fahrspuren, der Fahrbahnverlauf 4, der eigene Fahrkorridor bzw. der eigene vorausberechneten Fahrtrajektorie, die Art der Fahrspurbegrenzung, die Breite der Fahrspurbegrenzung, die Krümmung der Fahrbahn, der Gierwinkelfehler $\Delta\omega$, die Fahrspurbreite $B_f$, die Fahrbahnbreite, die Querabweichung Q, der Abstand zur linken und/oder rechten Fahrspurbegrenzung $D_y$, der minimale Abstand zur linken und/oder rechten Fahrspurbegrenzung während eines Fahrzyklus und die Sichtgüte, welche eine Sichteinschränkung des Fahrerassistenzsystems A durch ein Hindernis oder einen sonstigen Umgebungseinfluss charakterisiert, vorgesehen.

Die Auflistung der Parameter ist rein beispielhaft und nicht abschließend. Vorzugsweise werden nur jene Fahrzeugparameter und/oder Umgebungsparameter erfasst bzw. jene Messungen durchgeführt, welche als Kriterium zur Beurteilung des Fahrerassistenzsystems A oder einer Fahrsituation dienen.

Die subjektive Beurteilung der Assistenzsysteme erfolgt dabei vorzugsweise sowohl von der Fahrer-, und von der Beifahrerperspektive, als auch aus der Perspektive von Frauen und Männer unterschiedlichen Alters und mit unterschiedlicher Fahrerfahrung, also von verschiedenen Probandengruppen, welche idealerweise statistisch die typischen Endkunden charakterisieren.

Vorzugsweise werden nach einer ersten Eingewöhnungsphase, in der sich die Probanden, d.h. die Testfahrer bzw. Testbeifahrer, mit der Bedienung und Funktion des Fahrerassistenzsystems A vertraut machen, Kriterien, vorzugsweise mit Fragebögen, abgefragt, die mit der Akzeptanz des Fahrerassistenzsystems A in Zusammenhang stehen.

Aus der Auswertung der abgefragten Kriterien in Verbindung mit Bemerkungen in den Fragebögen können die notwendigen Parameter für eine Bewertung eines Fahrerassistenzsystems in einzelnen Fahrsituationen, z.B. jene für die Abstandskontrolle oder den Fahrspurassistenten, ermittelt werden.

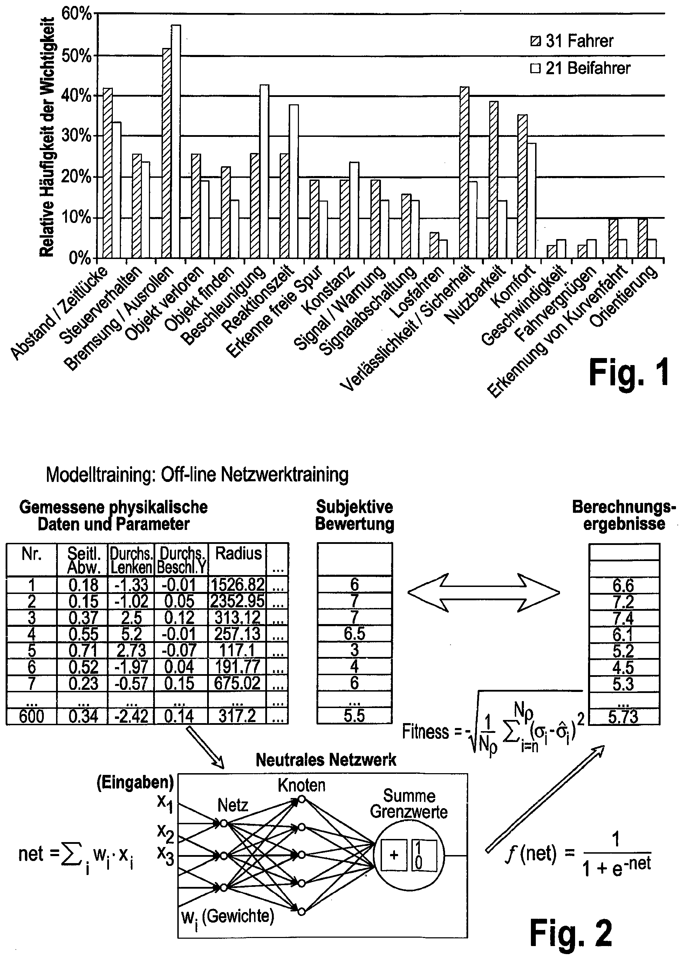

Wie in Fig. 1 gezeigt, ergab sich bei Versuchen, welche für Abstandskontrolle und Fahrspurassistent A von der Anmelderin gemacht wurden, wesentliche Unterschiede zwischen der Fahrer- (jeweils linker Balken) und Beifahrerbewertung (jeweils rechter Balken) der genannten Kriterien. Vor allem beim aktiviertem Fahrspurassistenten A ist der Fahrer, der zwar nicht selbst lenkt, aber trotzdem hinter dem Lenkrad sitzt, wesentlich sensibler für die Regeltätigkeit der Lenkung und nimmt andere Kriterien wahr, als der Proband auf dem Beifahrersitz. Der Beifahrer dagegen ist eher sensibel auf Änderungen der Querbeschleunigung und auf optisch erfasste Spuränderungen des Fahrzeuges auf der Straße.

Ein deutlicher Unterschied besteht auch in der Anzahl von genannten Bewertungskriterien zwischen Endkunden und Experten. Experten nennen in etwa dreimal so viele Kriterien wie Endkunden, wobei Experten sowohl positive wie auch negative Eigenschaften benennen, Endkunden jedoch vorrangig nur negative. Die Summe aller genannten Kriterien wurde für die Definition der Kriterien zur Optimierung bzw. Charakterisierung von Fahrerassistenzsystemen herangezogen.

Für die einzelnen einer Fahrsituation zugeordneten Kriterien werden vorzugsweise jeweils mindestens ein messbarer Fahrzeugparameter und/oder ein messbarer Umgebungsparameter festgelegt, welcher dieses Kriterium messtechnisch charakterisiert.

Vorzugsweise werden in einem nächsten Schritt Fahrzyklen mit den Probanden durchgeführt, wobei weiter vorzugsweise gleichzeitig Messdaten der festgelegten Fahrzeugparameter durch Sensoren im Fahrzeug, Umgebungsparameter durch Radar/Lidar-, Ultraschall und Kamerasysteme und die Aktivität des zumindest einen Fahrerassistenzsystems A mittels der Veränderung der festgelegten Parameter oder über eine Schnittstelle zu dem Fahrerassistenzsystem A selbst für eine Vielzahl von Verkehrssituationen aufgenommen werden.

Nach Abschluss der Fahrzyklen werden die Probanden nochmals in Bezug auf die für verschiedene Fahrersituationen des jeweiligen Fahrerassistenzsystem A ermittelten Kriterien befragt und gebeten, das jeweilige Fahrerassistenzsystem A abschließend und übergreifend nach den Fahrsituationen zu bewerten. Dieses Festhalten der Eindrücke der Probanden erfolgt vorzugsweise anhand eines standardisierten Bewertungsbogens und auch Kommentare betreffend besonderer Auffälligkeiten zu den einzelnen von dem Fahrerassistenzsystem A durchgeführten Steuereingriffe können weiter vorzugsweise abgegeben werden. Die Expertengruppe bewertet das Verhalten des Fahrerassistenzsysteme A in Intervallen von vorzugsweise etwa 10 Sekunden oder bei besonderen Auffälligkeiten zusätzlich mit einem Zusatzbewertungsbogen mit subjektiven Noten gemäß einer Skala von 1 bis 10 (in Anlehnung an die Skala nach den VDI-Richtlinien 2563). Hierbei stellt 10 die beste Bewertung (Störungen auch durch geübten Beurteiler nicht mehr feststellbar) und 1 die schlechteste Bewertung (nicht mehr akzeptabel) dar.

Bei der Bewertung der Längsdynamik streut die Benotung von Experten im Allgemeinen bei einem Kriterium üblicherweise nur um +/- 0,5 Noten. Bei den relativ neuen Fahrerassistenzsystemen ergeben sich dagegen größere Streuungen. Die Gründe liegen in der Neuartigkeit der Systeme, aber auch in der Anzahl von kritischen Fahrsituationen, in denen beispielsweise eine Abstandskontrolle, ein Fahrspurassistent oder ein automatisiertes/autonomes System bewertet werden. Unter anderem werden die Bremscharakteristik und die Reproduzierbarkeit bei "Bremsung bei Folgefahrt" subjektiv unterschiedlich bewertet.

Außerdem sind nach Auswertung der Daten bei einzelnen Fahrmanövern im Allgemeinen auch Streuungen bei den Reaktionen des Fahrerassistenzsystems A festzustellen, auch wenn das Versuchsfahrzeug, das Vorausfahrzeug, die Versuchsstrecke und die Randbedingungen möglichst konstant gehalten werden. Ein Beispiel für eine Fahrsituation mit großer Streuung in der Reaktion eines Fahrerassistenzsystems zur Abstandskontrolle ist die Fahrsituation "Vorausfahrzeug bremst mittelstark (Verzögerung ca. -4m/s$^2$) bis zum Stillstand". Dafür kann es mehrere Ursachen geben, die sowohl am Vorausfahrzeug wie auch am eigenen Fahrzeug liegen können. Sobald das Vorausfahrzeug mit der Bremsung beginnt, sind die Bremslichter für Fahrer und Beifahrer sichtbar. Beide warten bei Aufleuchten der Bremslichter auf die erste Reaktion der Abstandskontrolle und eine angemessene Regelung des Abstandes zum Vorausfahrzeug während der Abbremsung. Die Abstandskontrolle reagiert aber erst bei einer systemseitig vorgegebenen Abstandsänderung zum Vorderfahrzeug, z.B. weil sich die Relativgeschwindigkeit oder der Abstand zwischen den beiden Fahrzeugen ändert. Somit hängt die Bewertung auch vom Vorausfahrzeug und vom Bremsstil des Fahrers des Vorausfahrzeuges ab. Die Streuungen des subjektiven Empfindens sind dadurch hier stärker ausgeprägt als in anderen Fahrsituationen.

Bei Annäherung an ein langsamer vorausfahrendes oder bremsendes Fahrzeug besteht potentiell die höchste Sensibilität der Fahrzeuginsassen bezüglich Bremsbeginn und Bremsverhalten einer Abstandskontrolle. Hier spielt offensichtlich auch die Antizipation des Menschen aufgrund der Erfassung der gesamten Verkehrssituation eine wesentliche Rolle. So wird zum Beispiel ein passender Verzögerungsbeginn bei schneller Annäherung auf ein langsam fahrendes Fahrzeug auf der Autobahn und freier Überholspur als störend früh beurteilt, weil der Fahrer beabsichtigt, das Fahrzeug zu überholen. Dasselbe Verhalten der Abstandskontrolle ohne freie Fahrspur, weil beispielsweise gerade ein LKW einen anderen überholt, wird aufgrund der anderen Wahrnehmung der Umgebung als zu spät beurteilt. In Fällen, bei denen keine freie oder weitere Fahrspur zur Verfügung steht, verstärkt sich das kritische Empfinden hinsichtlich eines zu späten Verzögerungsbeginns, wenn das vorausfahrende Fahrzeug ein Bremsmanöver einleitet.

Die Streuungen bei der Bewertung von Kriterien des Fahrspurassistenten sind im Allgemeinen geringer als die einer Abstandskontrolle, was die Sensibilität von Probanden bezüglich Bremsverhalten unterstreicht.

Die erwähnten Beispiele zeigen die hohe Komplexität und Abhängigkeit der menschlichen Beurteilung von den Umgebungsbedingungen. Gleiche Eingangsgrößen von Fahrzeuggeschwindigkeit, Fahrzeugabstand und Differenzgeschwindigkeit können in Abhängigkeit von verschiedenen Umgebungsbedingungen bzw. Fahrsituationen zu vollkommen unterschiedlichen Bewertungen führen. Dies zeigt auch die Wichtigkeit einer Bildauswertung neben der Radarmesstechnik im Fahrzeug.

Vorzugsweise werden von dem patentgemäßen System daher auch Umgebungsparameter wie das Aufleuchten der Bremslichter des Vorderfahrzeugs, welche keine physikalische Information über die Bewegung des Vorausfahrzeugs oder Straßensitation enthalten, von einem Fahrzeuginsassen aber dennoch zur Beurteilung der Fahrsituation wahrgenommen werden, ausgewertet, um die subjektive Wahrnehmung einer Fahrsituation auf einen Fahrzeuginsassen zu ermitteln. Daher können die zur Beurteilung der Fahrsituation herangezogenen (objektiven) physikalischen Parameter von den zur Beurteilung der Wahrnehmung herangezogenen (subjektiven) physikalischen Parametern teilweise oder ganz verschieden sein.

Mit den subjektiven Bewertungen der Endkunden und der Experten und den objektiven Messdaten der Fahrzeugparameter und Umgebungsparameter werden vorzugsweise mittels neuronaler Netze Bewertungsalgorithmen und Korrekturfunktionen, insbesondere komplexe, multidimensionale Formeln, erstellt. Eine solche Vorgehensweise ist in Figur 2 veranschaulicht. Damit lassen sich Expertenbewertungen und oder Endkundenbewertungen objektiv nachbilden. Dabei kann das System bevorzugt sowohl zur Bewertung für eine statistisch repräsentative Gruppe, als auch für eine jeweilige Probandengruppe eingerichtet werden.

Hieraus ergibt sich eine Korrekturfunktion für eine objektive Charakterisierung bzw. Bewertung der subjektiven Wahrnehmung einer Fahrsituation durch einen Fahrzeuginsassen für die Attribute Fahrqualität des Fahrerassistenzsystems A sowie die Fahrsicherheit, die Beanspruchung des Fahrzeugs und/oder die Fahrbarkeit des Fahrzeugs bei Einsatz des Fahrerassistenzsystems A.

Der einfachste Fall einer Korrekturfunktion für ein Fahrerassistenzsystem A ist hierbei vorzugsweise eine Tabelle, in welcher erfasste Funktionen bzw. Werte und bestimmte Funktionen bzw. Werte unter Berücksichtigung der jeweiligen Abhängigkeiten abgelegt sind. Eine solche Korrekturfunktion lässt sich vorzugsweise auch als lineare Abhängigkeit von den jeweiligen Kriterien bzw. Parametern für die jeweiligen Fahrsituationen wiedergeben, wobei sich der Korrekturwert KW der Korrekturfunktion dann vorzugsweise wie folgt ergibt:

$$KW = c_1 \cdot Para_1 + c_2 \cdot Para_2 + c_3 \cdot Para_3 + ... + c_n \cdot Para_n + c_{n+1} \cdot Para_{n+1} + ...$$

$$\underbrace{\qquad\qquad}_{\text{Fahrsituation 1}} \quad \underbrace{\qquad\qquad}_{\text{Fahrsituation 2}} \quad \underbrace{\qquad\qquad}_{\text{Fahrsituation 3}}$$

Eine Kalibrierung des erfindungsgemäßen Systems kann vorzugsweise auch auf andere Weise erfolgen, zum Beispiel in Bezug auf Referenzfahrerassistenzsysteme, deren gute oder sehr gute Eigenschaften in Bezug auf die obigen Attribute schon bekannt sind.

Bezüglich der Kalibrierung eines solchen Systems wird ergänzend auf die Offenbarung der bereits zitierten EP 0 836 945 A1 verwiesen.

Ist das erfindungsgemäße System kalibriert, kann dieses zur Optimierung von einem oder mehreren Fahrerassistenzsystemen A gleichzeitig herangezogen werden. Rein beispielhaft wird vorliegend die Optimierung eines Fahrerassistenzsystems A, wiederum zum Beispiel die Abstandskontrolle oder der Fahrspurassistent, eines Fahrzeugs 5 beschrieben.

Vorzugsweise werden zunächst das bzw. die zu optimierenden Fahrerassistenzsysteme des Fahrzeugs, vorliegend das Fahrerassistenzsystem A, durch den Benutzer oder im automatischen Modus durch das System selbst festgelegt.

Im Folgenden werden an dem Fahrzeug 5 vorzugsweise Messungen während einem Fahrzyklus durchgeführt, anhand derer Fahrzeugparameter und Umgebungsparameter messtechnisch, vorzugsweise mittels Sensoren, ermittelt werden. Vorzugsweise werden dabei alle verfügbaren Parameter kontinuierlich aufgenommen, so dass eine durchgehende Charakterisierung des Fahrzeugs 5 während des Fahrzyklus möglich ist.

Für die Objektivierung des subjektiven Empfindens ist es notwendig, physikalisch messbare Parameter zu definieren, die mit dem subjektiven Empfinden korrelieren. Bei den betrachteten Fahrerassistenzsystemen A sind das im Wesentlichen verschiedene physikalische Parameter, da die Abstandskontrolle die Längsdynamik des Fahrzeuges 5 beeinflusst und der Fahrspurassistent auch die Querdynamik. Für jede Fahrsituation ergibt sich dabei vorzugsweise ein offensichtlicher Hauptparameter. Die Abstandsregelgüte der Abstandskontrolle ist vorzugsweise vom Abstand zum Vorausfahrzeug abhängig. Um eine gute Korrelation zu erreichen, werden neben dem wahrscheinlich wichtigsten Hauptparameter vorzugsweise auch eine größere Zahl von physikalischen Zusatzparametern mitgemessen. Bei der Abstandskontrolle sind dies vorzugsweise u.a. Abstand, absolute und relative Geschwindigkeit zum Vorausfahrzeug, relative Längsbeschleunigung, Querbeschleunigung, Fahrbahnbreite, Gegenverkehr, usw.

Diese werden vorzugsweise jeweils in einer Fahrzeugparameterfunktion und einer Umgebungsparameterfunktion zusammengefasst, welche weiter vorzugsweise von der Zeit oder einer Position des Fahrzeugs abhängen. Die Parameterfunktionen bilden daher vorzugsweise Tupel oder Vektoren von einzelnen Fahrzeugparametern bzw. Umgebungsparametern.

Auf der Grundlage der Fahrzeugparameterfunktion und/oder der Umgebungsparameterfunktion wird die vorliegende Fahrsituation bestimmt. Die Fahrsituation beschreibt hierbei den Betriebszustand des Fahrzeugs und/oder die umgebende Verkehrssituation, welcher das Fahrzeug ausgesetzt ist und welche durch das Fahrerassistenzsystem A bewältigt werden muss. Diese Bestimmung der Fahrsituation geschieht dabei vorzugsweise durch die Berechnung des momentanen Werts einer Fahrsituationskennwertfunktion.

Weiterhin wird ein Kriterium zur Charakterisierung der Aktivität des Fahrerassistenzsystems A bestimmt. Da vorzugsweise nicht vorgesehen ist, dass das erfindungsgemäße System Zugriff auf Informationen aus dem Fahrerassistenzsystem A hat, wird die Aktivität, insbesondere ein Vorliegen eines Steuereingriffs und/oder eine Intensität des Steuereingriffs des Fahrerassistenzsystems A, aus dem oder den gemessenen Fahrzeugparameter und/oder dem oder den gemessenen Umgebungsparametern abgeleitet. Alternativ kann die Aktivität auch über eine Schnittstelle zu dem Fahrerassistenzsystem A ausgelesen werden. Als Kriterien zur Charakterisierung der Aktivität kommen hierbei vorzugsweise die Abschaltschwelle, die Ausstiegshäufigkeit, die Reaktion auf das Vorausfahrzeug die Reaktion auf eine Fahrspurabweichung, die Reaktionszeit, die Ansprechverzögerung und die Erfassungsdauer für ein Objekt, d.h. die Zeitdauer, die vergeht, bevor das Fahrerassistenzsystem A ein bestimmtes Objekt erfasst, des Fahrerassistenzsystems A in Betracht. Weiter vorzugsweise hängt das für die Bestimmung des Vorliegens eines Steuereingriffs betrachtete Kriterium von der Fahrsituation bzw. von dem Wert der Fahrsituationskennwertfunktion und/oder dem betrachteten Fahrerassistenzsystem A ab. So wird für die Abstandskontrolle beispielsweise die Reaktion auf eine Abstandsabweichung und für den Fahrspurassistenten die Reaktion auf eine Fahrspurabweichung betrachtet. Die Kriterien für die Aktivität, d.h. das Eingreifen oder das Nicht-Eingreifen, des Fahrerassistenzsystems wird dabei vorzugweise auf der Grundlage der Fahrzeugparameterfunktion und/oder der Umgebungsparameterfunktion berechnet, d.h. unter Verwendung wenigstens eines Fahrzeugparameters und wenigstens eines Umgebungsparameters aus diesen Funktionen. Die Bestimmung der Aktivität des Fahrerassistenzsystems A geschieht dabei vorzugsweise über eine Steuereingriffskennwertfunktion.

Schließlich wird eine Korrekturfunktion zur Charakterisierung bzw. zum Ausdruck für die subjektive Wahrnehmung der vorliegenden Fahrsituation durch zumindest einen Fahrzeuginsassen vorzugsweise auf der Grundlage wenigstens eines Fahrzeugparameters und/oder wenigstens Umgebungsparameter bestimmt. Die Korrekturfunktion hängt von der jeweiligen Fahrsituation und einem ggf. erfolgten Steuereingriff ab. Das oder die für die Wahrnehmung der jeweiligen Fahrsituation betrachteten Kriterien bzw. Parameter hängen vorzugsweise von dem zu charakterisierenden Fahrerassistenzsystem A ab. Die Bestimmung der Korrekturfunktion für die subjektive Wahrnehmung geschieht dabei vorzugsweise über einen Kennwert, wobei die Korrekturfunktion bzw. der Kennwert vorzugsweise die Abhängigkeiten der mittels neuronaler Netze erstellten bzw. trainierten Bewertungsalgorithmen wiedergibt.

Wenn sich die Fahrsituationskennwertfunktion nicht ändert, wird die Korrekturfunktion vorzugsweise jeweils periodisch, insbesondere für ein Zeitintervall von maximal etwa 10 s, bevorzugt maximal etwa 5 s berechnet. Wenn sich die Fahrsituationskennwertfunktion während eines solchen Zeitintervalls ändert, wird vorzugsweise die Korrekturfunktion für den Zeitraum des vorhergehenden Fahrsituationskennwerts bzw. der vorhergehenden Fahrsituation seit der letzten periodischen Berechnung berechnet. Zusätzlich wird eine neuerliche periodische Berechnung der Korrekturfunktion für den nachfolgenden Fahrsituationskennwert bzw. Fahrsituation gestartet.

Vorzugsweise hängt der Steuereingriffskennwert und weiter vorzugsweise die wenigstens eine Korrekturfunktion des Weiteren von dem zu charakterisierenden Fahrzeugassistenzsystem A ab. Beispielsweise werden für die Charakterisierung einer Abstandskontrolle also vorzugsweise andere Funktionen verwendet wie bei einem Fahrspurassistenten.

Vorzugsweise wird bei der Berechnung der Korrekturfunktion und/oder der Steuereingriffskennwertfunktion zumindest ein Fahrzeugparameter und/oder zumindest ein Umgebungsparameter aus der Fahrzeugparameterfunktion oder der Umgebungsparameterfunktion herangezogen, welcher nicht bei der Berechnung der Fahrsituationsparameterfunktion verwendet wird. Umgekehrt kann aber auch bei der Berechnung der Fahrsituationsparameterfunktion zumindest ein Fahrzeugparameter und/oder zumindest ein Umgebungsparameter aus der Fahrzeugparameterfunktion oder der Umgebungsparameterfunktion herangezogen werden, welcher nicht Berechnung der Korrekturfunktion und/oder der Steuereingriffskennwertfunktion verwendet wird. Selbiges gilt auch zwischen der Berechnung der Korrekturfunktion und der Berechnung Steuereingriffskennwertfunktion.

Beispielhaft wird die Charakterisierung der Außenwahrnehmung des Fahrers für die Fahrqualität eines Fahrspurassistenten anhand des Kriteriums Querregelgüte dargestellt, für welche als physikalische Parameter, welche vorzugsweise die Umgebungsparameter und/oder Fahrzeugparameter bilden oder aus welchen diese abgeleitet sind, vorzugsweise Lenkrad- und Gierwinkel bzw. Gierwinkelfehler, die Geschwindigkeit, Querbeschleunigung, die Fahrspurkrümmung sowie die Lage der Bahnkurve bzw. Trajektorie des Fahrzeugs (Abstand zum Fahrspurrand, Abstand zur Fahrspurmitte) herangezogen werden. Dabei soll das Fahrzeug in jeder Fahrsituation, vorliegend der Fahrsituation freies Fahren, einer auf den Fahrer angenehm und sicher wirkenden Bahnkurve innerhalb der Fahrspur folgen.

Wesentliche Einflüsse auf die Querregelgüte haben vor allem starke Gradienten und Wechselanteile (Unstetigkeiten) in den Signalen Lenkradwinkel, Gierwinkel und Querbeschleunigung, da jegliches Zucken in der Lenkung oder bezüglich der Fahrtrichtung als unangenehm und teilweise auch als unsicher empfunden werden.

Die gewählte Fahrlinie wird als souverän und sicher von den Fahrzeuginsassen wahrgenommen, wenn die Fahrlinie durch eine Kurvenkombination weitgehend einer Ideallinie mit möglichst großen Radien und harmonischen Richtungsänderungen entspricht.

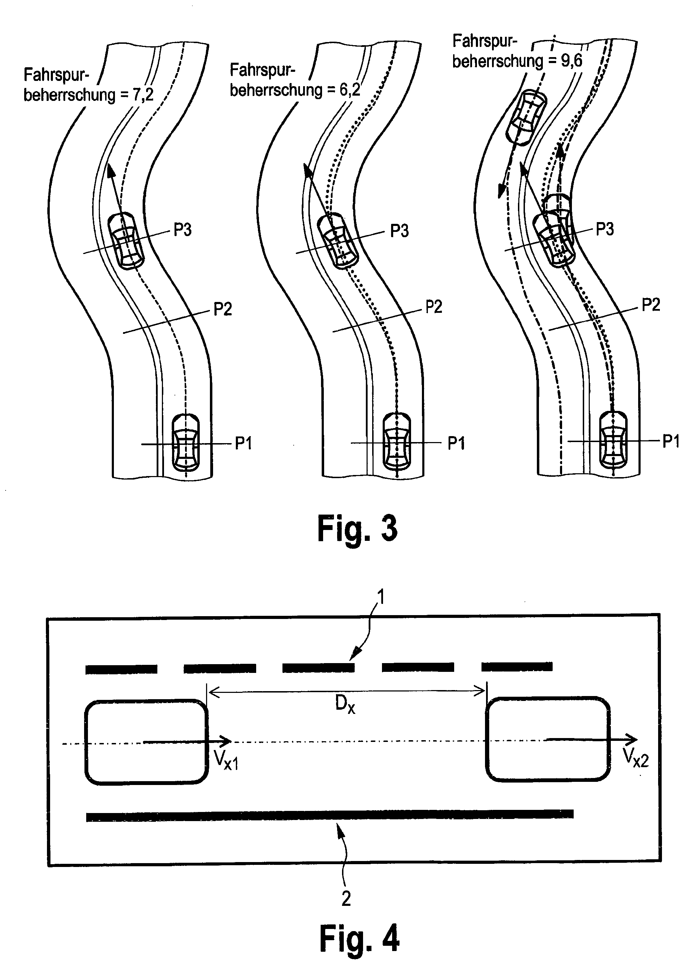

Figur 3 links zeigt die Fahrlinienwahl exakt in Fahrspurmitte für eine leichte Links-Rechts-Kurvenkombination. Bei der Analyse des Subjektivempfindens wird diese Fahrlinienwahl aufgrund der relativ deutlichen Richtungsänderungen an den Wegpunkten P2 und P3 bezüglich Spurhaltung als akzeptabel bewertet.

Figur 3 in der Mitte zeigt ein leicht verspätetes Reagieren des Fahrspurhaltereglers bezogen auf die Mitte der Fahrspur, hier werden die relativ starken Richtungsänderungen als zu spät und somit an dem Wegpunkt P3 auch als unsicher empfunden und bewertet, weil der Wagen zu sehr in Richtung Gegenfahrbahn und Gegenverkehr steuert.

Die rechte Fahrspurwahl in Fig. 3 rechts, angedeutet durch einen gestrichelten Pfeil, entspricht einer Ideallinie mit den größtmöglichen Kurvenradien und kleinstmöglichen Richtungsänderungen innerhalb der Fahrspur. Dieses Verhalten wurde hinsichtlich Sicherheits- und Fahrqualitätsempfinden am besten bewertet. Das Beispiel zeigt einerseits die Herausforderungen an die Querregelgüte und Abstimmung von Fahrspurassistenten, sowie die hohe Komplexität das Subjektivempfinden des Menschen für die Spurhaltung auf Basis von messbaren physikalischen Parametern objektiv bewertbar darzustellen.

Bei dem Fahrerassistenzsystem Abstandssteuerung werden vorzugsweise folgende Parametern in Abhängigkeit von der jeweiligen Fahrsituation zur Charakterisierung bzw. zum Ausdruck der subjektiven Wahrnehmung durch einen Fahrzeuginsassen herangezogen:

Für die Fahrsituation Folgen bei konstanter Geschwindigkeit die Parameter Relativgeschwindigkeit $v_{rel}$ zu einem benachbarten Fahrzeug, insbesondere Minimalgeschwindigkeit und Maximalgeschwindigkeit sowie die Standardabweichung der Geschwindigkeit in einem Zeitintervall, Steuerdauer der Abstandskontrolle, welche die Einschwingzeit des Reglers charakterisiert, Abstand $D_x$ zum benachbarten Fahrzeug, insbesondere der Minimalabstand, der Maximalabstand sowie die Standardabweichung während eines Zeitintervalls, Geschwindigkeit $v_{x1}$ des geführten Fahrzeugs 5, insbesondere der Mittelwert während einem Zeitintervall, gewünschte Geschwindigkeit des Fahrzeugs, Zeitlücke zum benachbarten Fahrzeug sowie relative Beschleunigung $v_{rel}$ zum benachbarten Fahrzeug, insbesondere der Minimalwert, der Maximalwert sowie die Standardabweichung während eines Zeitintervalls.

Ein Vorliegen der Fahrsituation Folgen bei konstanter Geschwindigkeit wird vorzugsweise angenommen, wenn dass das Fahrzeug, dem zu folgen ist, eine Beschleunigung aufweist, welche in einem Zeitraum von 4 s geringer als 0,3 m/s$^2$ ist. Die Fahrsituation wird vorzugsweise als beendet angenommen, wenn die Geschwindigkeit des Fahrzeugs, welchem zu folgen ist, größer als 0,3 m/s$^2$ ist, oder wenn das Fahrzeug verloren wird. Bei der Beschleunigung des zu folgenden Fahrzeugs handelt es dabei um einen Umgebungsparameter.

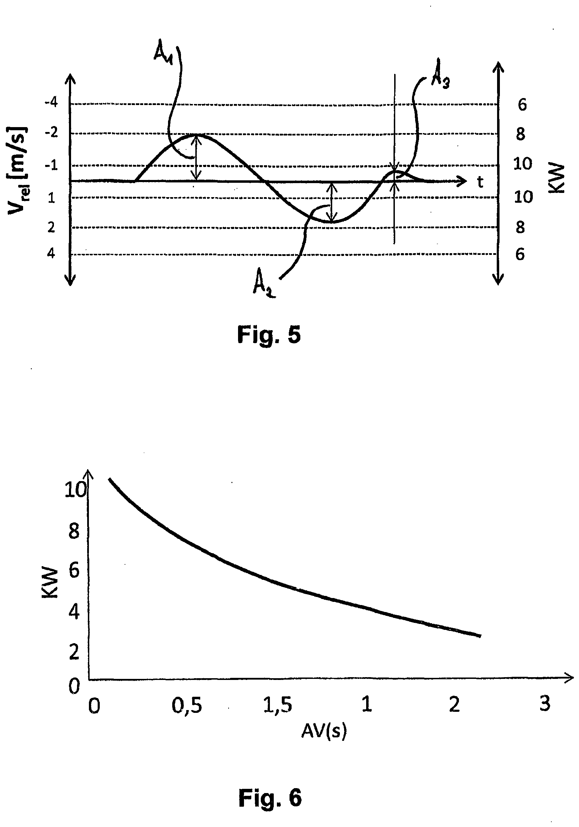

Verschiedene vorzugweise zu betrachtenden Parameter in Bezug auf die Fahrsituation Folgen bei konstanter Geschwindigkeit sind in Fig. 4 und Fig. 5 dargestellt.

Figur 4 stellt eine typische Fahrsituation Folgen bei konstanter Geschwindigkeit dar, bei welcher dem vorausfahrenden benachbarten Fahrzeug gefolgt wird. Es werden der gewünschte Abstand, sowie die Geschwindigkeiten $vx_1$, $vx_2$ des geführten Fahrzeugs 5 sowie des zu folgenden Fahrzeugs $v_{x2}$ dargestellt. Die Abstandskontrolle soll hierbei das Fahrzeug zwischen der linken Fahrspurbegrenzung 1 und der rechten Fahrspurbegrenzung 2 mit einem gewünschten Abstand zum vorausfahrenden Fahrzeug führen, wobei dieser Abstand zum vorausfahrenden Fahrzeug ein Umgebungsparameter ist.

Figur 5 stellt eine den Einregelvorgang der Geschwindigkeit $v_{x1}$ des geführten Fahrzeugs 5 auf die Geschwindigkeit $v_{x2}$ des Vorausfahrzeugs dar, wenn der gewünschte Abstand X erreicht ist. Insbesondere sind die Steuerdauer sowie die Amplituden A1, A2, A3 der Steuerabweichung während dem Einregelvorgangs entnehmbar. Die Steuerdauer der Abstandskontrolle sowie die Amplituden A1, A2, A3 charakterisieren hierbei die Aktivität des Fahrerassistenzsystems A und werden, wie dargestellt, aus dem Umgebungsparameter $v_{rel}$, insbesondere mittels einer Steuereingriffsfunktion, abgeleitet. Weiterhin wird eine vereinfachte Abhängigkeit des Korrekturwerts KW der Korrekturfunktion von der den Amplituden A1, A2, A3 dargestellt, wobei andere Parameter, welche gegebenenfalls einen Einfluss auf diesen Parameter haben, rein beispielhaft außer Betracht gelassen werden.

Für die Fahrsituation Folgen bei Beschleunigung des benachbarten Fahrzeugs werden vorzugsweise die Parameter Ansprechverzögerung, Abstand $D_X$ zum benachbarten Fahrzeug, insbesondere der Minimalabstand, der Maximalabstand und die Standardabweichung während eines Zeitintervalls, Geschwindigkeit $v_{x1}$, insbesondere die Minimalgeschwindigkeit, die Maximalgeschwindigkeit und der Mittelwert während eines Zeitintervalls, gewünschte Geschwindigkeit, Zeitlücke zum benachbarten Fahrzeug, relative Geschwindigkeit zum benachbarten Fahrzeug, insbesondere der Minimalwert, der Maximalwert und die Standardabweichung während eines Zeitintervalls, relative Beschleunigung zu einem benachbarten Fahrzeug, insbesondere der Minimalwert, der Maximalwert und die Standardabweichung während eines Zeitintervalls, Chassis-Beschleunigung, d.h. die Beschleunigung an der jeweiligen Insassensitzschiene und/oder erwartete Chassis-Beschleunigung, d.h. die Beschleunigung, welche durch das jeweilige geführte Fahrzeug 5 realisierbar ist, berücksichtigt.

Die Fahrsituation Folgen bei Beschleunigung wird dabei vorzugsweise als vorliegend angenommen, wenn die

Beschleunigung $v_{x2}$ des Fahrzeugs, welchem gefolgt werden soll, größer als 1 m/s² in einem Zeitintervall von mehr als 2 s ist. Die Fahrsituation wird vorzugsweise als beendet angenommen, wenn die Beschleunigung des Fahrzeugs, welchem gefolgt werden soll, kleiner als 0,51 m/s² ist oder dieses Fahrzeug verloren geht.

Eine vereinfachte Darstellung der Abhängigkeit des Korrekturwertes KW der Korrekturfunktion in Abhängigkeit von der Ansprechverzögerung AV (in Sekunden) ist in Fig. 6 dargestellt. Anderen gegebenenfalls zu betrachtenden Parameter für ein Folgen bei Beschleunigung werden hierbei außer Betracht gelassen.

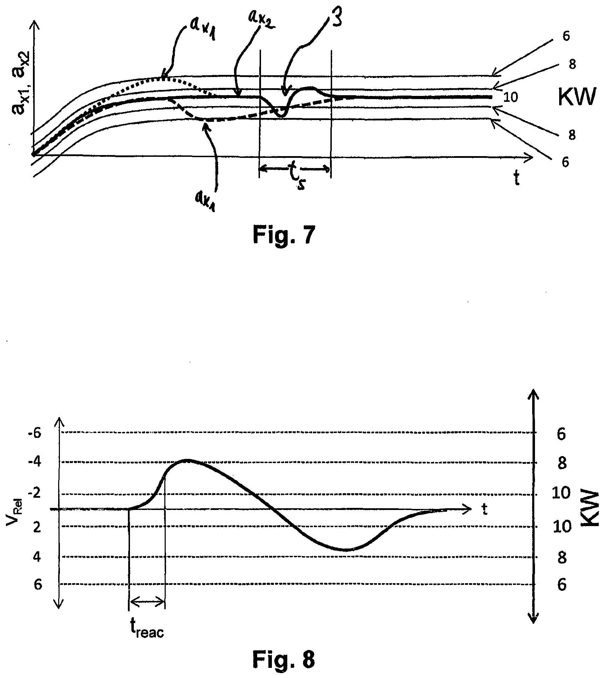

In Fig. 7 ist der Einfluss der Relativ-Beschleunigung bespielhaft auf den Korrekturwert KW der Korrekturfunktion dargestellt. Je nachdem wie stark die Beschleunigung $a_{x1}$ des mit der Abstandskontrolle geführten Fahrzeugs von der Beschleunigung $a_{x2}$ des Vorausfahrzeugs abweicht (gepunktete Kurve für den Fall größerer Beschleunigung $a_{x1}$ des geführten Fahrzeugs; gestrichelte Kurve für den Fall größerer Beschleunigung $a_{x2}$ des Vorausfahrzeugs), werden, bei außer Betracht lassen gegebenenfalls anderer relevanter Parameter, abnehmende Korrekturwerte KW vergeben.

Schwankungen 3 der Beschleunigung des Vorausfahrzeugs sollten dabei aus der Berechnung der Kenngröße ausgeschlossen werden. Eine solche Schwankung 3 ist bei einem Schaltvorgang des vorausfahrenden Fahrzeugs ebenfalls in Fig. 7 dargestellt. Der Bereich $t_s$ wird daher bei einer Charakterisierung ausgeblendet.

Eine weitere Fahrsituation bei der Abstandskontrolle ist das "Folgen bei Verlangsamen bzw. bei Bremsen", für welche vorzugsweise die folgenden Parameter in Betracht gezogen werden: Reaktionszeit der Abstandskontrolle, Abstand $D_x$ zum vorangehenden Fahrzeug, insbesondere der Minimalabstand, der Maximalabstand und die Standardabweichung während eines Zeitintervalls, Geschwindigkeit $v_{x1}$, insbesondere die Minimalgeschwindigkeit, die Maximalgeschwindigkeit und der Mittelwert während eines Zeitintervalls, gewünschte Geschwindigkeit, Zeitlücke, welche den Abstand zum Vordermann charakterisiert, Relativgeschwindigkeit, insbesondere der Minimalwert, der Maximalwert und die Standardabweichung während eines Zeitintervalls, Relativbeschleunigung, insbesondere der Minimalwert, der Maximalwert sowie die Standardabweichung während eines Zeitintervalls, Chassis-Beschleunigung und/oder Kollisionsdauer.

Ein Vorliegen der Fahrsituation Folgen bei Bremsen ist vorzugsweise dann gegeben, wenn die Bremsverzögerung des Fahrzeugs, dem gefolgt werden soll, kleiner als -1m/s² während eines Zeitraums von mehr als 1 s ist. Eine Beendigung der Fahrsituation Folgen bei Verlangsamung ist vorzugsweise dann gegeben, wenn die Beschleunigung des Fahrzeugs, welchem gefolgt werden soll, kleiner als -0,21 m/s² ist.

In Fig. 8 ist der Einfluss des Minimalwerts bzw. des Maximalwerts der Relativgeschwindigkeit auf den Korrekturwert KW der Korrekturfunktion dargestellt, wenn andere gegebenenfalls relevante Parameter nicht einbezogen werden. Umso größer der Maximalwert der Relativgeschwindigkeit $v_{rel}$, d.h. die Abweichung der Geschwindigkeit $v_{x1}$ des mit der Abstandsregelung geführten Fahrzeugs 5 in Bezug auf das Fahrzeug, dem gefolgt werden soll, desto schlechter (bzw. niedriger) ist der Korrekturwert KW. Aus dieser Figur kann auch die Reaktionszeit $t_{reac}$ aus dem Umgebungsparameter Relativgeschwindigkeit $v_{rel}$ bestimmt werden. Unter Nichtbeachtung anderer gegebenenfalls relevanter Parameter ist der Einfluss des Parameters Reaktionszeit $t_{reac}$ auf den Korrekturwert der Korrekturfunktion ähnlich zu jenem der Ansprechverzögerung AV in Bezug auf die Fahrsituation Folgen bei Beschleunigung, dargestellt in Fig. 6.

Eine weitere Fahrsituation der Abstandskontrolle ist vorzugsweise das Folgen bis Fahrzeugstopp, mit den Parametern Abstand zu dem zu folgenden Fahrzeug, insbesondere der Minimalabstand während eines Zeitintervalls, Chassis-Beschleunigung während des Abbremsvorgangs sowie Bremsruck beim Anhalten.

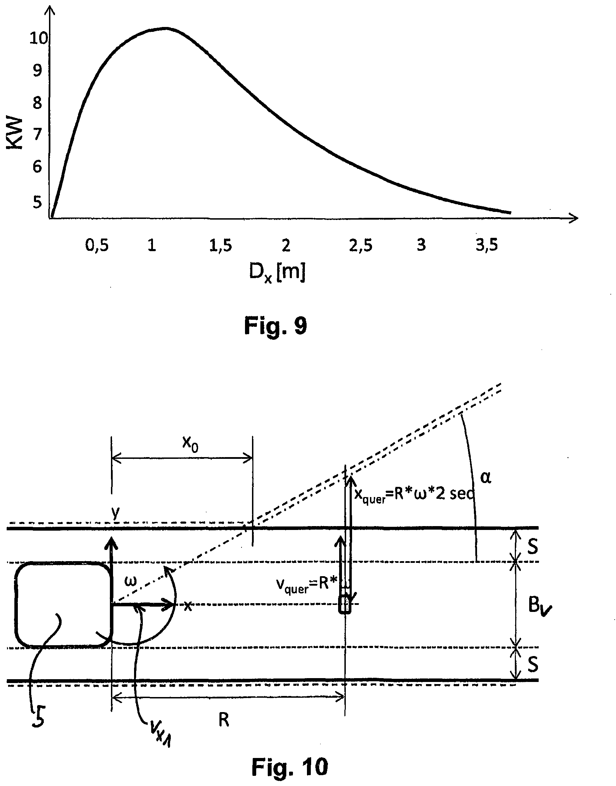

Ein Vorliegen der Fahrsituation Folgen bis Fahrzeugstopp ist vorzugsweise dann gegeben, wenn die Fahrzeuggeschwindigkeit $v_{x2}$ des Fahrzeugs, dem gefolgt werden soll, kleiner als 0,3 m/s während eines Zeitraums von mehr als 1 s ist. Eine Beendigung der Fahrsituation Folgen bis Fahrzeugstopp ist vorzugsweise dann gegeben, wenn das durch die Abstandskontrolle geführte Fahrzeug 5 zum Stillstand kommt. Ein Diagramm einer vorzugsweisen Abhängigkeit der Korrekturfunktion vom Abstand $D_x$ zu dem zu folgenden Fahrzeug ist, wenn andere gegebenenfalls relevante Parameter außer Acht gelassen werden, in Fig. 9 dargestellt.

Eine weitere Fahrsituation der Abstandskontrolle ist vorzugsweise das Folgen beim Losfahren mit den Parametern Abstand $D_x$ zu dem zu folgenden Fahrzeug beim Losfahren, insbesondere der Maximalabstand oder der Mittelwert während eines Zeitintervalls, Ansprechverzögerung AV, Relativgeschwindigkeit $v_{rel}$, insbesondere die Maximalgeschwindigkeit oder der Mittelwert in einem Zeitintervall, die Relativbeschleunigung a, insbesondere der Maximalwert oder der Mittelwert in einem Zeitintervall, die Chassis-Beschleunigung, insbesondere der Minimalwert, der Maximalwert oder Mittelwert in einem Zeitintervall und/oder die erwartete Chassis-Beschleunigung.

Ein Vorliegen der Fahrsituation Folgen beim Losfahren ist vorzugsweise dann gegeben, wenn die Beschleunigung $a_{x2}$ des Fahrzeugs, dem gefolgt werden soll, größer als 1 m/s² ist. Eine Beendigung der Fahrsituation Folgen beim Losfahren ist vorzugsweise dann gegeben, wenn das durch die Abstandskontrolle geführte Fahrzeug 5 ebenfalls eine Beschleunigung $a_{x1}$ von mehr als 1 m/s² aufweist. Mit wachsendem Abstand $D_x$ des geführten Fahrzeugs 5 zu dem zu folgenden Fahrzeug nimmt ein Korrekturwert KW der Korrekturfunktion tendenzielle ab, wenn andere gegebenenfalls relevante Parameter außer Acht gelassen werden.

Zwei weitere unterschiedene Fahrsituationen bei der Abstandskontrolle sind vorzugsweise das "Folgen bei Einscheren" und das "Folgen bei Ausscheren" mit den Parametern Ansprechverzögerung AV, Abstand $D_x$ zu dem

einscherenden bzw. ausscherenden Fahrzeug, insbesondere als Minimalabstand oder Mittelwert in einem Zeitintervall, die Steuerdauer, welche die Einregeldauer des Fahrerassistenzsystems A wiedergibt, die Relativgeschwindigkeit $v_{rel}$ zu dem einscherenden bzw. ausscherenden Fahrzeug, insbesondere der Maximalwert oder der Mittelwert in einem Zeitintervall, die Relativbeschleunigung, insbesondere der Maximalwert oder der Mittelwert in einem Zeitintervall, die Chassis-Beschleunigung, d.h. die an der Sitzschiene des jeweiligen Fahrzeuginsassen gemessene Beschleunigung, insbesondere der Minimalwert, der Maximalwert oder Mittelwert in einem Zeitintervall, die Geschwindigkeit $v_{x1}$, insbesondere der Mittelwert in einem Zeitintervall, die gewünschte Geschwindigkeit und die Zeitlücke zu dem ein- bzw. ausscherenden Fahrzeug.

Ein Vorliegen der Fahrsituation "Folgen bei Einscheren bzw. Ausscheren" ist vorzugsweise dann gegeben, wenn ein Einscheren in den Fahrkorridor, insbesondere in den 2-Sekunden-Sicherheitskorridor, einschert, wobei das einscherende Objekt bzw. Fahrzeug vorzugsweise eine Breite von zumindest 1 m aufweisen sollte. Eine Beendigung der Fahrsituation "Folgen bei Einscheren" ist dann gegeben, wenn die die Relativgeschwindigkeit $v_{rel}$ zu dem eingescherten Fahrzeug einen Wert kleiner als 0,5 m/s erreicht. Der 2-Sekunden-Sicherheitskorridor wird beispielhaft in Fig. 10 gezeigt. Dieser ist von den Parametern Fahrzeugbreite $F_y$ des geführten Fahrzeugs, den Sicherheitsabstand S, welcher von der Geschwindigkeit des geführten Fahrzeugs abhängt, dem Abstand zu dem einscherenden Fahrzeug $D_x$ und dem Gierwinkel $\omega$ des geführten Fahrzeugs abhängig. Wenn sich kein Objekt bzw. Fahrzeug innerhalb dieses Bereichs befindet, welcher auch durch die gestrichelte Linie gekennzeichnet wird, ist der Sicherheitskorridor frei (die sogenannte 2-Sekunden-Prognose).

Ein Vorliegen der Fahrsituation "Folgen bei Ausscheren" ist vorzugsweise dann gegeben, wenn ein Ausscheren erkannt wird, d.h., wenn ein vorausfahrendes Fahrzeug den Fahrkorridor verlässt oder wenn das vorausfahrende Fahrzeug sich weniger als 0,5 m in dem Fahrkorridor befindet. Eine Beendigung der Fahrsituation Folgen bei Ausscheren ist vorzugsweise dann gegeben, wenn die Relativgeschwindigkeit zu dem neuen vorausfahrenden Fahrzeug kleiner als $\pm$ 0,5 m/s ist, oder, wenn kein Fahrzeug vorausfährt, die gewünschte Fahrzeuggeschwindigkeit $V_{x1}$ des geführten Fahrzeugs erreicht wird. Der Korrekturwert KW der Korrekturfunktion steigt mit abnehmender Reaktionszeit bei der Fahrsituation Folgen beim Ausscheren an, wenn andere gegebenenfalls relevante Parameter außer Acht gelassen werden.

Eine weitere mögliche Fahrsituation der Abstandskontrolle ist vorzugsweise die Beschleunigung bei freier Bahn mit den Parametern Reaktionszeit, gewünschte Geschwindigkeit, Chassis-Beschleunigung, erwartete Chassis-Beschleunigung, Fahrzeuggeschwindigkeit $v_{x1}$, insbesondere der Mittelwert in einem Zeitintervall, das Verhältnis von Fahrkorridor zu Fahrspurbreite $B_f$, insbesondere der Mittelwert in einem Zeitintervall und die Belegtheit des Fahrkorridors.

Eine weitere mögliche Fahrsituation der Abstandskontrolle ist vorzugsweise das Auffahren auf ein langsameres Objekt für welche vorzugsweise die folgenden Parameter in Betracht gezogen werden: Reaktionszeit der Abstandskontrolle, Abstand $D_x$ zum vorangehenden Fahrzeug, insbesondere der Minimalabstand, der Maximalabstand und die Standardabweichung während eines Zeitintervalls, Geschwindigkeit $v_{x1}$, insbesondere die Minimalgeschwindigkeit, die Maximalgeschwindigkeit und der Mittelwert während eines Zeitintervalls, gewünschte Geschwindigkeit, Zeitlücke, welche den Abstand zum Vordermann charakterisiert, Relativgeschwindigkeit, insbesondere der Minimalwert, der Maximalwert und die Standardabweichung während eines Zeitintervalls, Relativbeschleunigung, insbesondere der Minimalwert, der Maximalwert sowie die Standardabweichung während eines Zeitintervalls, Chassis-Beschleunigung und/oder Kollisionsdauer. Ein Vorliegen der Fahrsituation Auffahren auf ein langsameres Objekt ist vorzugsweise dann gegeben, wenn ein Objekt mit mehr als 0,5 m Breite in den Fahrkorridor eintritt und die eigene Fahrgeschwindigkeit höher als jene das vorausfahrenden Objektes ist. Eine Beendigung der Fahrsituation Auffahren auf ein langsameres Objekt ist vorzugsweise dann gegeben, wenn eine Reaktion des erfindungsgemäßen Systems erfasst wird, insbesondere wenn durch eine Bremsung ein minimaler Abstand zum vorausfahrenden Fahrzeug bei einer Relativgeschwindigkeit von Null hergestellt wurde. Der Korrekturwert KW der Korrekturfunktion sinkt mit abnehmendem Minimalabstand bei der Fahrsituation Auffahren auf ein langsameres Objekt, wenn andere gegebenenfalls relevante Parameter außer Acht gelassen werden.

Eine weitere mögliche Fahrsituation der Abstandskontrolle ist vorzugsweise die Objekterfassung mit den Parametern Erfassungsdauer für ein Objekt, Fahrkorridor, relevante Objekte im Fahrkorridor und Verlieren des Objekts. Ein Vorliegen der Fahrsituation Objekterfassung ist vorzugsweise dann gegeben, wenn ein Objekt mit mehr als 0,5 m Breite in den Fahrkorridor eintritt. Eine Beendigung der Fahrsituation Objekterfassung ist vorzugsweise dann gegeben, wenn eine Reaktion des erfindungsgemäßen Systems, erfasst wird, insbesondere wenn eine Bremsung oder eine Beschleunigung größer als 0,5 m/s$^2$ ist. Der Korrekturwert KW nimmt bei der Objekterfassung mit sinkender Reaktionszeit $t_{reac}$ ab, wenn andere gegebenenfalls relevante Parameter außer Acht gelassen werden.

Für das Fahrerassistenzsystem A Fahrspurassistent werden für die Fahrsituation normale Fahrt ohne Fahrspurwechsel vorzugsweise folgende Kriterien zur Charakterisierung der Außenwahrnehmung durch zumindest einen Insassen mit den jeweils genannten Parametern ermittelt: Spurtreue mit den Parametern Abstand der Querabweichung, d.h. der Abstand von der Fahrzeugmitte $M_v$ zur Fahrspurmitte $M_f$, insbesondere als Maximalabstand, der Mittelwert und die Standardabweichung über ein Zeitintervall, die Fahrzeuggeschwindigkeit $v_{x1}$, insbesondere als Mittelwert und/oder die Fahrspurbreite $D_{trans}$, insbesondere als Mittelwert, Minimalwert oder Maximalwert eines Zeitintervalls. Als weiteres Kriterium wird vorzugsweise die Querregelgüte mit den Parametern Gierwinkelfehler $\Delta\omega$, insbesondere als Mittelwert, Maximalwert und Standardabweichung über ein Zeitintervall, Querbeschleunigung des Fahrzeugs $a_{y1}$, insbesondere als Mittelwert oder Maximalwert über ein Zeitintervall, Fahrspurkrümmung und/oder Fahrzeuggeschwindigkeit $v_{x1}$, insbesondere als Mittelwert, das Kriterium Abstand links $D_l$, bzw. Abstand rechts $D_r$ mit den Parametern Abstand zur linken und/oder rechten Fahrspurbegrenzung, insbesondere Minimalabstand oder Mittelwert während eines Zeitintervalls, Fahrspurbreite $B_f$, insbesondere als Mittelwert oder Minimum/Maximum während eines Zeitintervalls, die Querabweichung Q, insbesondere als Mittelwert oder Maximum während eines Zeitintervalls, die Fahrzeugbreite $B_v$ und/oder die Fahrzeuggeschwindigkeit $v_{x1}$, insbesondere als Mittelwert über ein Zeitintervall.

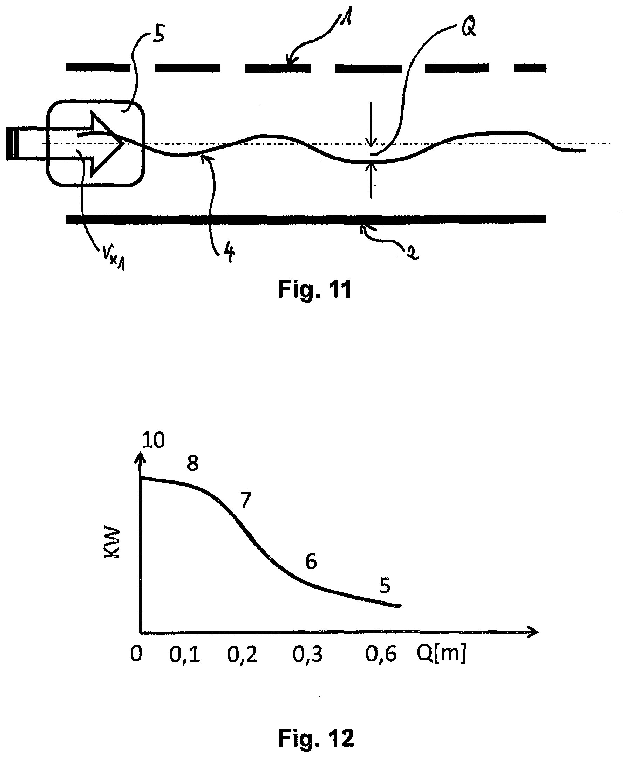

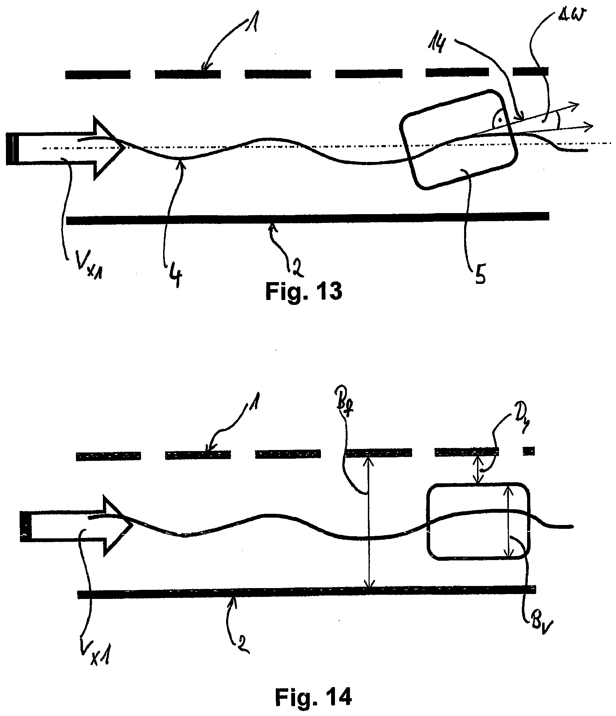

Die Fig. 11 zeigt die Position der Fahrspurmitte $M_f$ in Bezug auf den linken Fahrspurrand 1 und den rechten Fahrspurrand 2 sowie die Querabweichung Q in Bezug auf eine Bahnkurve bzw. Trajektorie 4 des Fahrzeugs 5. Das Diagramm aus Fig. 12 zeigt den Einfluss der Querabweichung Q auf den Korrekturwert KW der Korrekturfunktion unter Nichtbeachtung anderer gegebenenfalls relevanter Parameter. In Fig. 13 wird der Gierwinkelfehler $\Delta\omega$ dargestellt, welcher als Winkelabweichung zwischen der Fahrzeuglängsachse 14 und der Bahnkurve bzw. Trajektorie 4 des Fahrzeugs 5 definiert ist. Der Einfluss eines steigenden Gierwinkelfehlers $\Delta\omega$ führt ähnlich zu der in Fig. 12 gezeigten Abhängigkeit zu einer Verringerung des Korrekturwerts KW der Korrekturfunktion, insbesondere wenn andere gegebenenfalls relevante Parameter außer Acht gelassen werden.

Die Fig. 14 veranschaulicht die Parameter Fahrzeugbreite $B_v$, Fahrspurbreite $B_f$ und den Abstand $D_l$ zur linken Fahrspurbegrenzung 2. Die Charakterisierung der subjektiven Außenwahrnehmung der Fahrsituation erfolgt hierbei vorzugsweise über den relativen Fahrspurbegrenzungsabstand $D_{rel}$. Dieser berechnet sich wie folgt, wobei $D_{max}$ der Abstand zur Fahrspurbegrenzung 1, 2 ist, wenn sich das Fahrzeug 5 genau in der Mitte einer Fahrspur befindet:

$$D_{max} = \frac{(B_f - B_v)}{2}$$

$$D_{rel} = \frac{(D_{max} - D_l)}{D_{max}}$$

Der Einfluss eines steigenden relativen Fahrspurbegrenzungsabstand $D_{rel}$ führt ähnlich zu der in Fig. 12 gezeigten Abhängigkeit zu einer Verringerung des Korrekturwerts KW wenn andere gegebenenfalls relevante Parameter außer Acht gelassen werden.

Als weiteres Kriterium zur Beurteilung des Fahrerassistenzsystems A oder einer Fahrsituation wird vorzugsweise die Abschaltschwelle mit den Parametern mittlere oder maximale Querbeschleunigung bei einer Abschaltung des Fahrspurassistenten, dem Lenkwinkel bei einer Abschaltung und/oder dem Lenkmoment bei einer Abschaltung herangezogen.

Als weiteres Kriterium zur Beurteilung des Fahrerassistenzsystems A oder einer Fahrsituation wird vorzugsweise die Ausstiegshäufigkeit des Fahrerassistenzsystems mit den Parametern Spurgüte, d.h. Ausstiege des Fahrspurassistenten durch fehlerhafte Fahrspurerkennung pro Stunde, insbesondere als Mittelwert über ein Zeitintervall und/oder Fahrzeuggeschwindigkeit $v_{x1}$, insbesondere als Mittelwert über einen Zeitintervall, herangezogen.

Als weiteres Kriterium zur Beurteilung des Fahrerassistenzsystems A oder einer Fahrsituation wird vorzugsweise die Sichtgüte mit den Parametern Abstand zum Vorausfahrzeug, insbesondere als Mittelwert über ein Zeitintervall, Spurgüte, insbesondere als Mittelwert, und/oder der Fahrspurkrümmung, insbesondere als Mittelwert über ein Zeitintervall herangezogen.

Wird eine Bewertung anhand der Korrekturfunktion bzw. des Korrekturwerts und einer Referenzfunktion bzw. Referenzwerten durchgeführt, so werden die einzelnen Kriterien vorzugsweise einzeln bewertet. Aus diesen Bewertungen der einzelnen Kriterien werden wiederum die Bewertung der einzelnen Fahrsituationen und schließlich eine Gesamtbewertung zusammengesetzt. Weiter vorzugsweise werden die einzelnen Kriterien in Abhängigkeit von ihrem Einfluss auf die menschliche Wahrnehmung bezüglich der Fahrleistung des zu optimierenden Fahrerassistenzsystems gewichtet. Beispielsweise geht in die Bewertung der Fahrsituation Folgen bei konstanter Geschwindigkeit der Parameter Relativgeschwindigkeit $v_{rel}$ vorzugsweise mit fünffacher Gewichtung, der Parameter Abstand $D_x$ jedoch nur mit einfacher Gewichtung in die Bewertung ein. Weiter Vorzugsweise wird bei der Bewertung nach der Art von Fahrzeug unterschieden (beispielsweise SUV, PKW, LKW, etc.). Schließlich werden Extremwerte vorzugsweise stärker gewichtet, da sich gezeigt hat, dass extreme Fahrsituationen oder Steuereingriffe bzw. Fehler beim Steuereingriff durch das Fahrerassistenzsystem vom Fahrer stärker, insbesondere negativ, wahrgenommen werden.

Das erfindungsgemäße System kann bei einem realen Fahrerassistenzsystem A in einem realen Fahrzeug 5 zum Einsatz kommen, welches sich in einer realen Umgebung bewegt. Vorzugsweise kann das System aber auch zur Optimierung von Fahrerassistenzsystemen A eingesetzt werden, welche in einer virtuellen Realitätsumgebung, in welcher die Fahrzeugparameterfunktion und/oder die Umgebungsparameterfunktion emuliert werden, charakterisiert werden. Schließlich kann auch die Aktivität eines Fahrerassistenzsystems A simuliert werden, um dieses in einem möglichst frühen Entwicklungsstadium charakterisieren zu können.

Figur 15 zeigt den Messaufbau eines erfindungsgemäßen Systems, mithin eine Vorrichtung 6 zur Optimierung eines Fahrerassistenzsystems. Vorzugweise weist die Vorrichtung eine Schnittstelle 7 zu dem fahrzeuginternen Netzwerk (z.B. CAN) auf, um auf die dortigen Daten Zugriff zu haben. Weiterhin weist die Vorrichtung vorzugsweise eine zentrale Recheneinheit 8 auf, welche ein erstes Modul 9, welches auf der Grundlage eines Umgebungsparameters und/oder eines Fahrzeugparameters einen Fahrsituationskennwert berechnet, welcher eine Fahrsituation des Fahrzeugs charakterisiert, ein zweites Modul 10, welches auf der Grundlage eines Umgebungsparameters und/oder eines Fahrzeugparameters in Abhängigkeit von dem Fahrsituationskennwert einen Steuereingriffskennwert berechnet, und ein drittes Modul 11, welches auf der Grundlage des Steuereingriffskennwert und auf der Grundlage eines Umgebungsparameters und/oder eines Fahrzeugparameters in Abhängigkeit von dem Fahrsituationskennwert einen Korrekturwert KW berechnet, welcher eine subjektive Außenwahrnehmung der Fahrsituation durch zumindest einen Fahrzeuginsassen charakterisiert, aufweist.

Die Bestimmung der Parameter geschieht dabei über eine Reihe von Sensoren, welche vorzugsweise in einer Signalverarbeitungseinrichtung 13a, 13b verarbeitet werden. Als Umgebungssensoren können dabei beispielsweise vorausschauender Radar und rückschauender Radar, insbesondere Nahbereichsradar 12a, Fernbereichsradar 12b und Multi-Mode-Radar 12c, vorausschauender Lidar, rückschauender Lidar, Ultraschallsensor 12d, Infrarotkamera, insbesondere Nah-/Ferninfrarotkamera 12e und Kamera im sichtbaren Spektralbereich bzw. Bildverarbeitungskamera 12f und hochauflösendes GPS eingesetzt werden. Als Fahrzeugsensor können dabei beispielsweise Gyrometer, Geschwindigkeitsmesser, Beschleunigungssensor, hochauflösendes GPS, Vibrationssensor, Höhenmesser, Vermessungseinrichtung, Drehzahlmesser, Drehmomentmesser, Schaltsensor, Tankfüllstandssensor zum Einsatz kommen. Die Sensoren können als Zusatzsensoren vorgesehen werden oder vorzugsweise kann, soweit vorhanden, auf Fahrzeugsensoren und auf Umgebungssensoren zurückgegriffen werden, welche im Fahrzeug serienmäßig verbaut sind.

Eine vorzugsweise Anordnung der Radar/Lidar-Sensoren 12a, 12b, 12c, der Ultraschallsensoren 12d, Nah-/Ferninfrarotkamera 12e und einer Stereokamera 12f sind in Fig. 16 dargestellt.

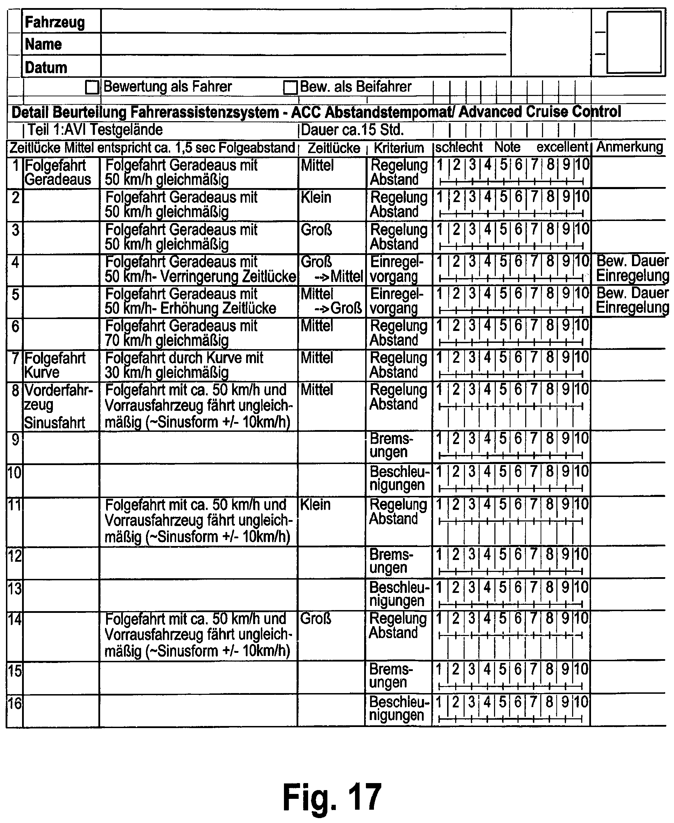

In Fig. 17 wird ein für die Beurteilung eines Abstandstempomaten durch Experten typischer Bewertungsbogen dargestellt, wie er vorzugsweise zum Training des erfindungsgemäßen Systems eingesetzt wird. In dem gezeigten Bewertungsbogen können für die drei Fahrsituationen "Folgefahrt geradeaus", "Folgefahrfahrt durch Kurve" und "Vorderfahrzeug Sinusfahrt" Bewertungen als Fahrer oder als Beifahrer in Bezug auf verschiedene Kriterien wie z. B. "Regelung Abstand" und "Bremsungen" oder auch "Beschleunigungen" bewertet werden. Hierbei werden die Fahrsituationen vorzugsweise in weitere Fahrsituationen untergliedert, z. B. "die Folgefahrt geradeaus", in "Folgefahrt geradeaus mit 50 km/h gleichmäßig mit mittlerer Zeitlücke", "Folgefahrt geradeaus mit 50 km/h gleichmäßig mit kleiner Zeitlücke" und "Folgefahrt geradeaus mit 50 km/h gleichmäßig mit großer Zeitlücke", d.h. großem zeitlichen Abstand zum vorausfahrenden Fahrzeug.

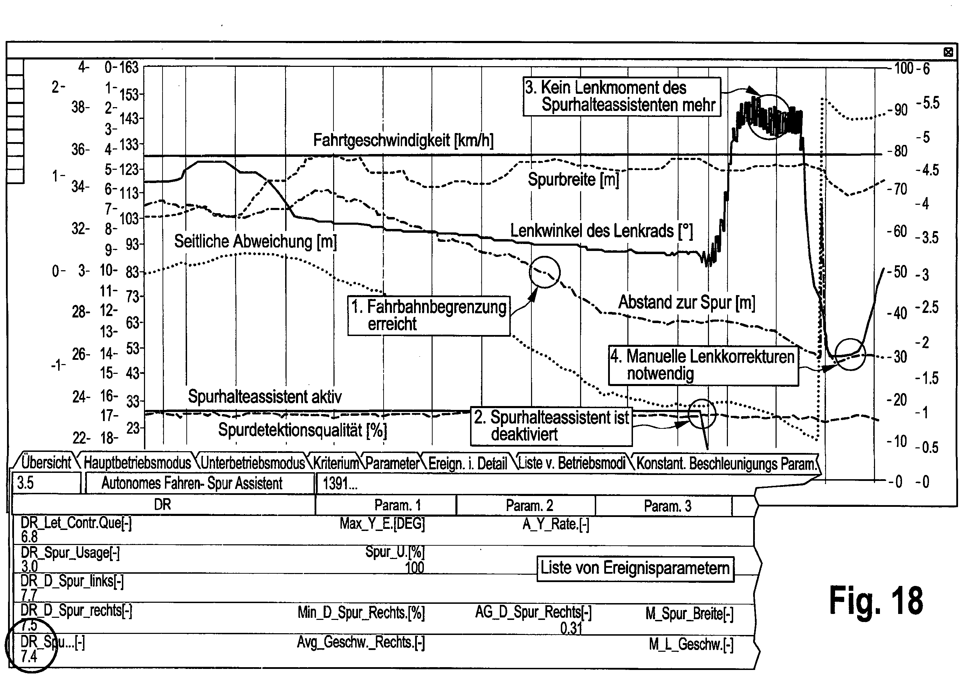

Fig. 18 zeigt ein Analysebeispiel für ein Ereignis während einer Testfahrt, in welcher ein Spurhalteassistent als Fahrerassistenzsystem A optimiert bzw. analysiert wird. Gezeigt werden dort der zeitliche Verlauf der Fahrzeugparameter, "Fahrzeuggeschwindigkeit" und "Lenkwinkel des Lenkrads" sowie der zeitliche Verlauf der Umgebungsparameter "Spurbreite", "seitliche Abweichungen des Fahrzeugs von der Fahrspurmitte" und "Abstand zur Spur". Im unteren Bereich des Diagramms wird die Aktivität des Spurhalteassistenten durch eine Linie angezeigt sowie die Spurdetektionsqualität. Nach einer gewissen Zeit wird bei 1 die Fahrbahnbegrenzungen erreicht. Überschreitet die Spurabweichung eine gewisse Schwelle, wird der Spurassistent bei 2. deaktiviert, was sich durch einen Abfall der Spurhalteassistenzaktivitätslinie manifestiert. Danach stellt der Spurhalteassistent bei 3. kein Lenkmoment mehr bereit, so dass der Fahrer bei 4. manuell in die Lenkung eingreifen muss und eine Lenkkorrektur vornehmen muss, um das Fahrzeug wieder auf Spur zu bringen. Die Aktivität des Fahrerassistenzsystems A, im vorliegenden Fall des Fahrspurassistenten, wird über die Spurhalteassistenzaktivitätslinie sowie über den Lenkwinkel des Lenkrads, welcher von dem Spurhalteassistenten gewählt wird, erfasst. Diese bilden über der Zeitachse mithin eine Steuereingriffskennwertfunktion. Die Fahrsituation wird im dargestellten Beispiel über die Fahrzeuggeschwindigkeit und gegebenenfalls die seitliche Abweichung des Fahrzeugs von der Spurmitte erfasst. Diese bilden mithin vorzugsweise eine Fahrsituationskennwertfunktion. Als Bewertung des Kriteriums Spurgüte, d.h. als Grundlage für eine Korrekturfunktion, könnte im vorliegenden Fall vorzugsweise der Abstand zur Spur oder die seitliche Abweichung im zeitlichen Verlauf herangezogen werden, welche vorzugsweise eine Umgebungsparameterfunktion darstellt. Diese wird weiter vorzugsweise noch in Abhängigkeit von der erfassten Steuereingriffskennwertfunktion und der Fahrsituationskennwertfunktion gesetzt. In dem in der Fig. 18 dargestellten Beispiel führt die Aktivität des Fahrerassistenzsystems A, d.h. des Spurhalteassistenten, zu einer solchen Abweichung von der Fahrspur, dass dieser deaktiviert werden muss bzw., dass die Unterstützung durch den Spurhalteassistenten abgebrochen werden muss und der Fahrer die Lenkung des Fahrzeugs manuell übernehmen muss. Dies führt vorzugsweise zu einer entsprechend niedrigen Bewertung des Kriteriums Spurgüte des analysierten Spurhalteassistenten.

Vorzugsweise wird das erfindungsgemäße System in einem Fahrzeug mit einem Fahrerassistenzsystem A eingesetzt, wobei das Fahrerassistenzsystem A eine Fahrsituation eines Fahrzeugs hinsichtlich zumindest eines Fahrsituationskriteriums, welches in dem Fahrerassistenzsystem A hinterlegt ist, überwacht und, wenn ein Fahrsituationskriterium nicht eingehalten wird, die Fahrsituation mittels einer Steuerkomponente durch zumindest einen Steuereingriff beeinflusst. Nachdem ein Korrekturwert zur Charakterisierung der subjektiven Wahrnehmung auf den zumindest einen Fahrzeuginsassen berechnet wurde kann das erfindungsgemäße System vorzugsweise das Fahrsituationskriterium, welches von dem Fahrerassistenzsystem A zum Steuern des Fahrzeugs verwendet wird, auf der Grundlage des jeweiligen Korrekturwerts KW der Korrekturfunktion verändern, um bei der nächsten ähnlichen oder gleichen Fahrsituation eine optimierte Steuerung durch das Fahrerassistenzsystem A zu gewährleisten. Das erfindungsgemäße System kann hierzu in dem Fahrzeug angeordnet sein, es kann aber auch an einem anderen Ort angeordnet sein, zu welchem eine Datenverbindung von dem Fahrzeug aus einrichtbar ist.

Auch wenn das erfindungsgemäße System im Vorhergehenden anhand der Fahrerassistenzsysteme A Abstandskontrolle und Fahrspurassistent beispielhaft erläutert werden, gelten die allgemeinen Prinzipien für alle Arten von Fahrerassistenzsystemen A, auch wenn die dortigen Kriterien und gemessenen Parameter andere sein sollten.

**Patentansprüche**

1.  Verfahren zur Analyse wenigstens eines Fahrerassistenzsystems A, welches die folgenden Arbeitsschritte aufweist:

    - Prüfen, ob das wenigstens eine Fahrerassistenzsystem A aktiviert ist;
    - Erfassen wenigstens eines Fahrzeugparameters, welcher geeignet ist, einen Betriebszustand eines Fahrzeugs zu charakterisieren, und/oder wenigstens eines Umgebungsparameters, welcher geeignet ist, die Umgebung des Fahrzeugs zu charakterisieren;
    - Bestimmen wenigstens eines Fahrsituationskennwerts, welcher eine Fahrsituationen des Fahrzeugs charakterisiert, und zwar wenigstens auf der Grundlage des wenigstens einen Fahrzeugparameters und/oder des wenigstens einen Umgebungsparameters;
    - Bestimmen wenigstens eines Steuereingriffskennwerts, welcher die Aktivität des wenigstens einen Fahrerassistenzsystems A charakterisiert, wobei die Aktivität aus dem wenigstens einen erfassten Fahrzeugparameter und/oder dem wenigstens einen erfassten Umgebungsparameter abgeleitet oder über eine Schnittstelle zu dem Fahrerassistenzsystem A ausgelesen oder durch Überwachung einer von dem Fahrerassistenzsystem A geregelten Größe bestimmt wird; und
    - Bestimmen eines Korrekturwerts, welcher von dem wenigstens einen Steuereingriffskennwert und der wenigstens einen Fahrsituationskennwert abhängt, auf der Grundlage des wenigstens einen Fahrzeugparameters und/oder des wenigstens einen Umgebungsparameters.

2.  Verfahren nach Anspruch 1, welches des weiteren folgenden Arbeitsschritt aufweist:

    - Festlegen des wenigstens einen zu optimierenden Fahrerassistenzsystems A.

3.  Verfahren nach einem der vorhergehenden Ansprüche, wobei der wenigstens eine Steuereingriffskennwert von dem Fahrsituationskennwert abhängt und/oder ebenfalls auf der Grundlage des wenigstens einen Fahrzeugparameters und/oder des wenigstens einen Umgebungsparameters berechnet wird.

4.  Verfahren nach einem der vorhergehenden Ansprüche, wobei der wenigstens eine Steuereingriffskennwert und/oder der Korrekturwert des Weiteren von dem zu charakterisierenden Fahrzeugassistenzsystem A abhängt.

5.  Verfahren nach einem der vorhergehenden Ansprüche, wobei der Fahrzeugparameter, der Umgebungsparameter, der Steuereingriffskennwert und/oder der Korrekturwert jeweils ein Parameterwertepaar aufweist, wobei einer der Parameterwerte insbesondre die Zeit oder die Position eines Fahrzeugs mit dem Fahrerassistenzsystem ist.

6.  Verfahren nach einem der vorhergehenden Ansprüche, wobei der Korrekturwert zusätzlich von Fluktuationen wenigstens eines Fahrzeugparameters, und/oder wenigstens eines Umgebungsparameters und/oder des wenigstens einen Steuereingriffskennwert abhängt.

7.  Verfahren nach einem der vorhergehenden Ansprüche, wobei der wenigstens eine Steuereingriffskennwert ein Vorliegen eines Steuereingriffs und/oder eine Intensität eines Steuereingriffs des Fahrerassistenzsystems charakterisiert.

8. Verfahren nach einem der vorhergehenden Ansprüche, wobei der wenigstens eine Steuereingriffskennwert des Weiteren von wenigstens einem Kriterium aus der Gruppe der folgenden Kriterien abhängt: die Abschaltschwelle, die Ausstiegshäufigkeit, die Reaktion auf das Vorausfahrzeug, die Reaktion auf eine Fahrspurabweichung, die Reaktion auf eine Fahrsituationsänderung, die Reaktion auf eine Abstandsabweichung, die Reaktionszeit, die Ansprechverzögerung und die Erfassungsdauer für ein Objekt des Fahrerassistenzsystems A.

9. Verfahren nach einem der vorhergehenden Ansprüche, wobei, wenn sich der wenigstens eine Fahrsituationskennwert während eines Zeitintervalls ändert, der Korrekturwert für den Zeitraum des vorhergehenden Fahrsituationskennwerts bzw. Fahrsituation seit der letzten periodischen Berechnung berechnet wird und eine periodische Berechnung des Korrekturwerts für den nachfolgenden Fahrsituationskennwert bzw. Fahrsituation gestartet wird.

10. Verfahren nach einem der vorhergehenden Ansprüche, wobei der wenigstens eine Fahrsituationskennwert als Kennwert zumindest eine Fahrsituation aus der Gruppe folgender Fahrsituationen annehmen kann: Folgen bei konstanter Geschwindigkeit, Folgen bei Beschleunigung, Folgen bei Verlangsamen/Bremsen, Folgen bis Fahrzeugstopp, Folgen ab Losfahren, Folgen bei Einscheren, Folgen bei Ausscheren, freie Beschleunigung, Auffahren auf ein langsameres Objekt, Objektdetektion, freies Fahren, Spurhalten, Spurwechsel, Überholen, Überholt werden, Stau, Stop&Go Verkehr und vorwärts oder rückwärts Einparken.

11. Verfahren nach einem der vorhergehenden Ansprüche, welches des weiteren folgenden Arbeitsschritt aufweist:

    - Korrigieren wenigstens eines Fahrsituationskriteriums, welches von dem Fahrerassistenzsystem A zum Steuern des Fahrzeugs verwendet wird, auf der Grundlage eines Korrekturwerts.

12. Verfahren nach einem der vorhergehenden Ansprüche, welches des weiteren folgenden Arbeitsschritt aufweist:

    - Bestimmen einer Bewertungsfunktion, insbesondere eines Bewertungswerts, in Abhängigkeit von dem Korrekturwert und einer Referenzfunktion.

13. Verfahren nach Anspruch 12, welches des weiteren folgenden Arbeitsschritt aufweist:

    - Gewichten der Kriterien und/oder der Parameter in Abhängigkeit ihres jeweiligen Einflusses auf die subjektive Wahrnehmung des Fahrzeuginsassen und/oder in Abhängigkeit der Art des Fahrzeugs.

14. Verfahren nach einem der vorhergehenden Ansprüche, welches des weiteren folgenden Arbeitsschritt aufweist:

    - Ausgeben des Korrekturwerts und/oder der Bewertungsfunktion.

15. Verfahren nach einem der vorhergehenden Ansprüche, wobei die subjektive Wahrnehmung der Aktivität des Fahrerassistenzsystems die Fahrqualität des Fahrerassistenzsystems, und/oder die Fahrsicherheit und/oder die Beanspruchung des Fahrzeugs und/oder die Fahrbarkeit des Fahrzeugs bei Einsatz des Fahrerassistenzsystems betrifft.

16. Verfahren nach einem der vorhergehenden Ansprüche, wobei der Korrekturwert geeignet ist, einen sicherheitsrelevanten Aspekt in Bezug auf ein Fahrzeug mit dem wenigstens einen Fahrerassistenzsystem zu charakterisieren, insbesondere eine fahrsituationsadäquate Geschwindigkeitsreduzierung, eine fahrsituationsadäquate Bremsverzögerung und/oder einen fahrsituationsadäquaten Lenkeinschlag.

17. Verfahren nach Anspruch nach einem der vorhergehenden Ansprüche, welches des weiteren folgenden Arbeitsschritt aufweist:

    - Vorgeben einer Umgebung der virtuellen Realität, in welcher der wenigstens eine Fahrzeugparameter und/oder der wenigstens eine Umgebungsparameter und/oder das Fahrerassistenzsystem A emuliert werden.

18. Verfahren nach einem der vorhergehenden Ansprüche, wobei der wenigstens eine Fahrzeugparameter zumindest einen Fahrzeugparameter aus der Gruppe umfassend die Fahrgeschwindigkeit, die Gierwinkelgeschwindigkeit, der Lenkwinkel, die Längsbeschleunigung, die Querbeschleunigung, die Vertikalbeschleunigung, die Gaspedalstellung, die Bremspedalstellung, die Motordrehzahl, die Drosselklappenstellung, die Gangstufe und der Einschaltzustand des Fahrerassistenzsystems A aufweist.

**19.** Verfahren nach einem der vorhergehenden Ansprüche, wobei der wenigstens eine Umgebungsparameter zumindest einen Fahrzeugparameter aus der Gruppe umfassend den Abstand zu zumindest einem anderen Fahrzeug, insbesondere dem Vorderfahrzeug, die Querposition zumindest eines anderen Fahrzeugs, insbesondere des Vorderfahrzeugs, gegenüber dem eigenen Fahrzeug, die Längsposition zumindest eines anderen Fahrzeugs, insbesondere des Vorderfahrzeugs, gegenüber dem eigenen Fahrzeug, die Relativgeschwindigkeit zumindest eines anderen Fahrzeugs, insbesondere des Vorderfahrzeugs, gegenüber dem eigenen Fahrzeug, die Relativbeschleunigung zumindest eines anderen Fahrzeugs, insbesondere des Vorderfahrzeugs, gegenüber dem eigenen Fahrzeug, die Breite zumindest eines anderen Fahrzeugs, insbesondere des Vorderfahrzeugs, die Art zumindest eines anderen Fahrzeugs, insbesondere des Vorderfahrzeugs, die Klasse zumindest eines anderen Fahrzeugs, insbesondere des Vorderfahrzeugs, die Anzahl der Fahrspuren, der Fahrbahnverlauf, der eigene Fahrkorridor bzw. der eigene vorausberechneten Fahrtrajektorie, die Art der Fahrspurbegrenzung, die Breite der Fahrspurbegrenzung, die Krümmung der Fahrbahn, der Gierwinkelfehler, die Fahrspurbreite, die Fahrbahnbreite, die Querabweichung, der Abstand zur linken und/oder rechten Fahrspurbegrenzung, der minimale Abstand zur linken und/oder rechten Fahrspurbegrenzung während eines Fahrzyklus und die Sichtgüte aufweist.

**20.** Verfahren nach einem der vorhergehenden Ansprüche, wobei die Berechnung des jeweils wenigstens einen Kennwerts und des Korrekturwerts während und/oder nach einer Fahrt und/oder einer Simulation des Fahrzeugs durchgeführt werden.

**21.** Computerprogramm, das Anweisungen umfasst, welche, wenn sie von einem Computer ausgeführt werden, diesen dazu veranlassen, die Schritte eines Verfahrens gemäß einem der Ansprüche 1 bis 20 ausführen.

**22.** Computerlesbares Medium, auf welchem ein Computerprogramm gemäß Anspruch 21 gespeichert ist.

**23.** Vorrichtung zur Analyse eines Fahrerassistenzsystems, aufweisend:

wenigstens einen Umgebungssensor zum Erfassen, insbesondere zur Messung, eines Umgebungsparameters, welcher geeignet ist, die Umgebung des Fahrzeugs zu charakterisieren;
wenigstens einen Fahrzeugsensor zum Erfassen, insbesondere zur Messung, eines Fahrzeugparameters, welcher geeignet ist, einen Betriebszustand eines Fahrzeugs zu charakterisieren,
ein erstes Modul, welches eingerichtet ist, auf der Grundlage wenigstens eines Umgebungsparameters und/oder eines Fahrzeugparameters einen Fahrsituationskennwert zu bestimmen, welcher geeignet ist, eine Fahrsituation des Fahrzeugs zu charakterisieren,
ein zweites Modul, welches geeignet ist eine Aktivität des Fahrerassistenzsystems zu überwachen und daraus einen Steuereingriffskennwert zu bestimmen, welcher die Aktivität des Fahrerassistenzsystems charakterisiert, wobei die Aktivität aus dem Fahrzeugparameter und/oder dem Umgebungsparameter abgeleitet oder über eine Schnittstelle zu dem Fahrerassistenzsystem ausgelesen oder durch Überwachung einer von den Fahrerassistenzsystem A geregelten Größe bestimmt wird;
ein drittes Modul, welches eingerichtet ist, um auf der Grundlage des Steuereingriffskennwerts und auf der Grundlage wenigstens eines Umgebungsparameters und/oder wenigstens eines Fahrzeugparameters in Abhängigkeit von dem Fahrsituationskennwert einen Korrekturwert (KW) zu bestimmen.

**24.** Fahrzeug mit einem Fahrerassistenzsystem, welches eine Fahrsituation eines Fahrzeugs hinsichtlich zumindest eines Fahrsituationskriteriums überwacht und, wenn ein Fahrsituationskriterium nicht eingehalten wird, die Fahrsituation mittels einer Steuerkomponente durch zumindest einen Steuereingriff beeinflusst, wobei das Fahrzeug des Weiteren eine Vorrichtung zur Optimierung des Fahrerassistenzsystems nach Anspruch 23 aufweist.

**Claims**

**1.** Method for analyzing at least one driver assistance system A, comprising the following steps:

- checking whether at least one driver assistance system A is activated;
- detecting at least one vehicle parameter which is suitable for characterizing an operating state of a vehicle, and/or at least one environment parameter which is suitable for characterizing the environment of the vehicle;
- determining at least one driving situation characteristic value characterizing a driving situation of the vehicle, based at least on the at least one vehicle parameter and/or the at least one environment parameter;
- determining at least one control intervention characteristic value which characterizes the activity of the at least one driver assistance system A, wherein the activity is derived from the at least one detected vehicle parameter and/or the at least one detected environment parameter or is read out via an interface to the driver assistance system A or is determined by monitoring a variable controlled by the driver assistance system A ; and
- determining a correction value, which depends on the at least one control intervention parameter and the at least one driving situation characteristic value, based on the at least one vehicle parameter and/or the at least one environment parameter.

**2.** A method according to claim 1, further comprising the following step:

    - specifying the at least one driver assistance system to be optimized A.

**3.** Method according to any one of the preceding claims, wherein the at least one control intervention characteristic value depends on the driving situation characteristic value and/or is also calculated on the basis of the at least one vehicle parameter and/or the at least one environment parameter.

**4.** Method according to any one of the preceding claims, wherein the at least one control intervention characteristic value and/or the correction value further depends on the vehicle assistance system A to be characterized.

**5.** Method according to any one of the preceding claims, wherein the vehicle parameter, the environment parameter, the control intervention characteristic value and/or the correction value each comprises a parameter value pair, wherein one of the parameter values is in particular the time or the position of a vehicle with the driver assistance system.

**6.** Method according to any one of the preceding claims, wherein the correction value additionally depends on fluctuations of at least one vehicle parameter, and/or at least one environment parameter, and/or the at least one control intervention characteristic value.

**7.** Method according to any one of the preceding claims, wherein the at least one control intervention characteristic value characterizes a presence of a control intervention and/or an intensity of a control intervention of the driver assistance system.

**8.** Method according to any one of the preceding claims, wherein the at least one control intervention characteristic value further depends on at least one criterion from the group of the following criteria: the switch-off threshold, the exit frequency, the reaction to the preceding vehicle, the reaction to a lane deviation, the reaction to a driving situation change, the reaction to a distance deviation, the reaction time, the reaction delay and the detection duration for an object of the driver assistance system A.

**9.** The method according to any one of the preceding claims,
wherein, if the at least one driving situation characteristic value changes during a time interval, the correction value for the period of the preceding driving situation characteristic value or driving situation is calculated since the last periodic calculation and a periodic calculation of the correction value for the subsequent driving situation characteristic value or driving situation is started.

**10.** Method according to any one of the preceding claims, wherein the at least one driving situation characteristic value can assume as characteristic value at least one driving situation from the group of the following driving situations: follow at constant speed, follow at acceleration, follow at deceleration/braking, follow until vehicle stop, follow from moving off, follow at latching, follow at swerving, free acceleration, hitting a slower object, object detection, free driving, lane keeping, lane changing, overtaking, being overtaken, traffic jam, stop&go traffic and forward or reverse parking.

**11.** Method according to any one of the preceding claims, further comprising the following step:

    - correcting at least one driving situation criterion used by the driver assistance system A to control the vehicle based on a correction value.

**12.** Method according to any one of the preceding claims, further comprising the following step:

    - determining an evaluation function, in particular an evaluation value, as a function of the correction value and a reference function.

13. Method according to claim 12, further comprising the following step:

- weighting of the criteria and/or the parameters depending on their respective influence on the subjective perception of the vehicle occupant and/or depending on the type of vehicle.

14. Method according to any one of the preceding claims, further comprising the following step:

- outputting the correction value and/or the evaluation function.

15. Method according to any one of the preceding claims, wherein the subjective perception of the activity of the driver assistance system relates to the driving quality of the driver assistance system, and/or the driving safety and/or the stress on the vehicle and/or the drivability of the vehicle when using the driver assistance system.

16. Method according to any one of the preceding claims, wherein the correction value is suitable for characterizing a safety-relevant aspect with respect to a vehicle with the at least one driver assistance system, in particular a driving situation-adequate speed reduction, a driving situation-adequate braking deceleration and/or a driving situation-adequate steering angle.

17. Method according to any one of the preceding claims, further comprising the following step:

- specifying a virtual reality environment in which the at least one vehicle parameter and/or the at least one environment parameter and/or the driver assistance system A are emulated.

18. Method according to any one of the preceding claims, wherein the at least one vehicle parameter comprises at least one vehicle parameter selected from the group consisting of the vehicle speed, the yaw angle speed, the steering angle, the longitudinal acceleration, the lateral acceleration, the vertical acceleration, the accelerator pedal position, the brake pedal position, the engine speed, the throttle position, the gear ratio, and the on state of the driver assistance system A.

19. Method according to any one of the preceding claims, wherein the at least one environmental parameter comprises at least one vehicle parameter selected from the group comprising the distance to at least one other vehicle, in particular the front vehicle, the transverse position of at least one other vehicle, in particular the front vehicle, with respect to the own vehicle, the longitudinal position of at least one other vehicle, in particular the front vehicle, with respect to the own vehicle, the relative speed of at least one other vehicle, the relative speed of at least one other vehicle, in particular of the vehicle in front, with respect to the own vehicle, the relative acceleration of at least one other vehicle, in particular of the vehicle in front, with respect to the own vehicle, the width of at least one other vehicle, in particular of the vehicle in front, the type of at least one other vehicle, in particular of the vehicle in front, the class of at least one other vehicle, in particular of the vehicle in front, the number of lanes, the course of the road, the own travel corridor or the own predicted driving trajectory, the type of lane boundary, the width of the lane boundary, the curvature of the lane, the yaw angle error, the lane width, the lane width, the lateral deviation, the distance to the left and/or right lane boundary, the minimum distance to the left and/or right lane boundary during a driving cycle, and the visibility quality.

20. Method according to any one of the preceding claims, wherein the calculation of the respective at least one characteristic value and the correction value are performed during and/or after a journey and/or a simulation of the vehicle.

21. Computer program comprising instructions which, when executed by a computer, cause the computer to perform the steps of a method according to any one of claims 1 to 20.

22. Computer-readable medium on which is stored a computer program according to claim 21.

23. Apparatus for analyzing a driver assistance system, comprising:

at least one environment sensor for detecting, in particular for measuring, an environment parameter which is suitable for characterizing the environment of the vehicle;
at least one vehicle sensor for detecting, in particular for measuring, a vehicle parameter which is suitable for characterizing an operating state of a vehicle,
a first module which is arranged to determine, on the basis of at least one environment parameter and/or one vehicle parameter, a driving situation characteristic value which is suitable for characterizing a driving situation of the vehicle,
a second module which is suitable for monitoring an activity of the driver assistance system and for determining therefrom a control intervention characteristic value which characterizes the activity of the driver assistance system, the activity being derived from the vehicle parameter and/or the ambient parameter or being read out via an interface to the driver assistance system or being determined by monitoring a variable controlled by the driver assistance system A;
a third module which is arranged to determine a correction value (KW) on the basis of the control intervention characteristic value and on the basis of at least one environment parameter and/or at least one vehicle parameter as a function of the driving situation characteristic value.

24. Vehicle having a driver assistance system which monitors a driving situation of a vehicle with regard to at least one driving situation criterion and, if a driving situation criterion is not met, influences the driving situation by means of a control component by at least one control intervention, the vehicle further having a device for optimizing the driver assistance system according to claim 23.

**Revendications**

1. Procédé d'analyse d'au moins un système d'assistance à la conduite A comportant les étapes suivantes :

   - Vérification de l'activation d'au moins un système d'assistance à la conduite A ;
   - Détection d'au moins un paramètre de véhicule approprié pour caractériser un état de fonctionnement d'un véhicule et/ou d'au moins un paramètre d'environnement approprié pour caractériser l'environnement du véhicule ;
   - Détermination d'au moins une valeur caractéristique de situation de conduite caractérisant une situation de conduite du véhicule, et ce, au moins sur la base de l'au moins un paramètre de véhicule et/ou de l'au moins un paramètre d'environnement ;
   - Détermination d'au moins une valeur caractéristique d'intervention de commande caractérisant l'activité de l'au moins un système d'assistance à la conduite A, l'activité étant dérivée de l'au moins un paramètre de véhicule détecté et/ou de l'au moins un paramètre d'environnement détecté ou extraite via une interface vers le système d'assistance à la conduite A ou déterminée par la surveillance d'une grandeur régulée par le système d'assistance à la conduite A ; et
   - Détermination d'une valeur de correction qui dépend de l'au moins une valeur caractéristique d'intervention de commande et de l'au moins une valeur caractéristique de situation de conduite, sur la base de l'au moins un paramètre de véhicule et/ou de l'au moins un paramètre d'environnement.

2. Procédé selon la revendication 1, comportant l'autre étape de travail suivante :

   - Détermination de l'au moins un système d'assistance à la conduite A à optimiser.

3. Procédé selon l'une quelconque des revendications précédentes, dans lequel au moins une valeur caractéristique d'intervention de commande dépend de la valeur caractéristique de situation de conduite et/ou est également calculé sur la base de l'au moins un paramètre de véhicule et/ou de l'au moins un paramètre d'environnement.

4. Procédé selon l'une quelconque des revendications précédentes, dans lequel l'au moins une valeur caractéristique d'intervention de commande et/ou la valeur de correction dépend en outre du système d'assistance à la conduite A à caractériser.

5. Procédé selon l'une quelconque des revendications précédentes, dans lequel le paramètre de véhicule, le paramètre d'environnement, la valeur caractéristique d'intervention de commande et/ou la valeur de correction présentent respectivement une paire de valeurs de paramètre, l'une des valeurs de paramètre étant en particulier le temps ou la position d'un véhicule avec le système d'assistance à la conduite.

6. Procédé selon l'une quelconque des revendications précédentes, dans lequel la valeur de correction dépend en plus de fluctuations d'au moins un paramètre de véhicule, et/ou d'au moins un paramètre d'environnement et/ou de l'au moins une valeur caractéristique d'intervention de commande.

7. Procédé selon l'une quelconque des revendications précédentes, dans lequel l'au moins une valeur caractéristique d'intervention de commande caractérise l'existence d'une intervention de commande et/ou une intensité d'une intervention de commande du système d'assistance à la conduite.

8. Procédé selon l'une quelconque des revendications précédentes, dans lequel l'au moins une valeur caractéristique d'intervention de commande dépend en outre d'au moins un critère du groupe des critères suivants : le seuil de coupure, la fréquence de descente du véhicule, la réaction au véhicule qui précède, la réaction à une déviation par rapport à la voie, la réaction à un changement de situation de conduite, la réaction à un écart de distance, le temps de réaction, le retard de réaction et la durée de détection pour un objet du système d'assistance à la conduite A.

9. Procédé selon l'une quelconque des revendications précédentes, dans lequel, si l'au moins une valeur caractéristique de situation de conduite change pendant un intervalle de temps, la valeur de correction pour la période de la valeur caractéristique de situation de conduite précédente ou de la situation de conduite depuis le dernier calcul périodique est calculée et un calcul périodique de la valeur de correction pour la valeur caractéristique de situation de conduite suivante ou de la situation de conduite est lancé.

10. Procédé selon l'une quelconque des revendications précédentes, dans lequel l'au moins une valeur caractéristique de situation de conduite peut prendre comme valeur caractéristique au moins une situation de conduite du groupe des situations de conduite suivantes : suivre vitesse constante, suivre en cas d'accélération, suivre en cas de ralentissement/freinage, suivre jusqu'à l'arrêt du véhicule, suivre à partir du démarrage, suivre en cas de rabattement, suivre en cas de déport, accélération libre, rapprochement de très près d'un objet plus lent, détection d'objet, conduite libre, maintien de voie, changement de voie, dépassement, être dépassé, embouteillage, circulation en accordéon et stationnement en marche avant ou en marche arrière.

11. Procédé selon l'une quelconque des revendications précédentes, présentant par ailleurs l'étape suivante :

- Correction d'au moins un critère de situation de conduite utilisé par le système d'assistance à la conduite A pour piloter le véhicule, sur la base d'une valeur de correction.

12. Procédé selon l'une quelconque des revendications précédentes, présentant par ailleurs l'étape suivante :

- Détermination d'une fonction d'évaluation, notamment d'une valeur d'évaluation, en fonction de la valeur de correction et d'une fonction de référence.

13. Procédé selon la revendication 12, comportant l'autre étape suivante :

- Pondération des critères et/ou des paramètres en fonction de leur influence respective sur la perception subjective de l'occupant du véhicule et/ou en fonction du type de véhicule.

14. Procédé selon l'une quelconque des revendications précédentes, présentant par ailleurs l'étape suivante :

- Edition de la valeur de correction et/ou de la fonction d'évaluation.

15. Procédé selon l'une quelconque des revendications précédentes, dans lequel la perception subjective de l'activité du système d'assistance à la conduite concerne la qualité de conduite du système d'assistance à la conduite, et/ou la sécurité de conduite et/ou la sollicitation du véhicule et/ou la maniabilité du véhicule en cas d'utilisation du système d'assistance à la conduite.

16. Procédé selon l'une quelconque des revendications précédentes, dans lequel la valeur de correction est appropriée pour caractériser un aspect sécuritaire par rapport à un véhicule équipé de l'au moins un système d'assistance à la conduite, en particulier une réduction de la vitesse adaptée à la situation de conduite, une décélération de freinage adaptée à la situation de conduite et/ou un angle de braquage adapté à la situation de conduite.

17. Procédé selon l'une quelconque des revendications précédentes, présentant par ailleurs l'étape suivante :

- Spécification d'un environnement de réalité virtuelle dans lequel l'au moins un paramètre de véhicule et/ou

**EP 3 041 726 B1**

l'au moins un paramètre d'environnement et/ou le système d'assistance à la conduite A sont émulés.

18. Procédé selon l'une quelconque des revendications précédentes, dans lequel l'au moins un paramètre de véhicule présente au moins un paramètre de véhicule du groupe comprenant la vitesse de conduite, la vitesse de mise en lacet, l'angle de braquage, l'accélération longitudinale, l'accélération transversale, l'accélération verticale, la position de la pédale d'accélérateur, la position de la pédale de frein, le régime moteur, la position du papillon des gaz, le rapport et l'état d'enclenchement du système d'assistance à la conduite A.

19. Procédé selon l'une quelconque des revendications précédentes, dans lequel l'au moins un paramètre d'environnement présente au moins un paramètre de véhicule du groupe comprenant la distance par rapport à au moins un autre véhicule, notamment au véhicule qui précède, la position transversale d'au moins un autre véhicule, notamment du véhicule qui précède, par rapport à son propre véhicule, la position longitudinale d'au moins un autre véhicule, notamment du véhicule qui précède, par rapport à son propre véhicule, la vitesse relative d'au moins un autre véhicule, notamment du véhicule qui précède, par rapport à son propre véhicule, l'accélération relative d'au moins un autre véhicule, notamment du véhicule qui précède, par rapport à son propre véhicule, la largeur d'au moins un autre véhicule, notamment du véhicule qui précède, le type d'au moins un autre véhicule, notamment du véhicule qui précède, la catégorie d'au moins un autre véhicule, notamment du véhicule qui précède, le nombre de voies de circulation, le tracé de la chaussée, son propre corridor de circulation ou sa propre trajectoire de circulation précalculée, le type de délimitation de voie, la largeur de la délimitation de voie, la courbure de la chaussée, l'erreur d'angle d'embardée, la largeur de la voie, la largeur de la chaussée, l'écart transversal, la distance par rapport à la délimitation de voie gauche et/ou droite, la distance minimale par rapport à la délimitation de voie gauche et/ou droite pendant un cycle de conduite et la qualité de la visibilité.

20. Procédé selon l'une quelconque des revendications précédentes, dans lequel le calcul de respectivement l'au moins une valeur caractéristique et de la valeur de correction est effectué pendant et/ou après un trajet et/ou une simulation du véhicule.

21. Programme informatique qui comprend des instructions qui, lorsqu'elles sont exécutées par un ordinateur, l'amènent à exécuter les étapes d'un procédé selon l'une quelconque des revendications 1 à 20.

22. Support lisible par ordinateur sur lequel est stocké un programme informatique selon la revendication 21.

23. Dispositif d'analyse d'un système d'assistance à la conduite, comportant :

au moins un capteur d'environnement pour détecter, en particulier pour mesurer, un paramètre d'environnement adapté pour caractériser l'environnement du véhicule ;
au moins un capteur de véhicule pour détecter, en particulier pour mesurer, un paramètre de véhicule adapté pour caractériser un état de fonctionnement d'un véhicule,
un premier module configuré pour déterminer, sur la base d'au moins un paramètre d'environnement et/ou d'un paramètre de véhicule, une valeur caractéristique de situation de conduite adaptée pour caractériser une situation de conduite du véhicule,
un deuxième module adapté pour surveiller une activité du système d'assistance à la conduite et en déterminer une valeur caractéristique d'intervention de commande caractérisant l'activité du système d'assistance à la conduite, l'activité étant dérivée du paramètre du véhicule et/ou du paramètre d'environnement ou étant extraite via une interface vers le système d'assistance à la conduite ou déterminée par la surveillance d'une grandeur régulée par le système d'assistance à la conduite A ;
un troisième module configuré pour déterminer une valeur de correction (KW) sur la base de la valeur caractéristique d'intervention de commande et sur la base d'au moins un paramètre d'environnement et/ou d'au moins un paramètre de véhicule en fonction de la valeur caractéristique de situation de conduite.

24. Véhicule doté un système d'assistance à la conduite qui surveille une situation de conduite d'un véhicule en ce qui concerne au moins un critère de situation de conduite et, si un critère de situation de conduite n'est pas respecté, influence la situation de conduite au moyen d'un composant de commande grâce à au moins une intervention de commande, le véhicule présentant en outre un dispositif d'optimisation du système d'assistance à la conduite selon la revendication 23.

25

**Fig. 1**

## Modelltraining: Off-line Netzwerktraining

**Gemessene physikalische Daten und Parameter**

| Nr. | Seitl. Abw. | Durchs. Lenken | Durchs. Beschl.Y | Radius | ... |
|---|---|---|---|---|---|
| 1 | 0.18 | -1.33 | -0.01 | 1526.82 | ... |
| 2 | 0.15 | -1.02 | 0.05 | 2352.95 | ... |
| 3 | 0.37 | 2.5 | 0.12 | 313.12 | ... |
| 4 | 0.55 | 5.2 | -0.01 | 257.13 | ... |
| 5 | 0.71 | 2.73 | -0.07 | 117.1 | ... |
| 6 | 0.52 | -1.97 | 0.04 | 191.77 | ... |
| 7 | 0.23 | -0.57 | 0.15 | 675.02 | ... |
| ... | ... | ... | ... | ... | ... |
| 600 | 0.34 | -2.42 | 0.14 | 317.2 | ... |

**Subjektive Bewertung**

| |
|---|
| 6 |
| 7 |
| 7 |
| 6.5 |
| 3 |
| 4 |
| 6 |
| ... |
| 5.5 |

**Berechnungsergebnisse**

| |
|---|
| 6.6 |
| 7.2 |
| 7.4 |
| 6.1 |
| 5.2 |
| 4.5 |
| 5.3 |
| ... |
| 5.73 |

$$\text{Fitness} = \sqrt{\frac{1}{N_\rho} \sum_{i=n}^{N_\rho} (\sigma_i - \hat{\sigma}_i)^2}$$

**Neutrales Netzwerk**

(Eingaben) $x_1$, $x_2$, $x_3$ — Netz — Knoten — Summe Grenzwerte

$w_i$ (Gewichte)

$$net = \sum_i w_i \cdot x_i$$

$$f(net) = \frac{1}{1 + e^{-net}}$$

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

32

| Start | Stop | Pause | |
|-------|------|-------|--|
| 77[s] | 0[%] | N. | |

Autonomes Fahren   7.4
Fahrspurassistent

**Fig. 15**

**Fig. 16**

| Fahrzeug | | | |
|---|---|---|---|
| Name | | | |
| Datum | | | |

☐ Bewertung als Fahrer    ☐ Bew. als Beifahrer

**Detail Beurteilung Fahrerassistenzsystem - ACC Abstandstempomat/ Advanced Cruise Control**

| Teil 1:AVI Testgelände | Dauer ca.15 Std. |

Zeitlücke Mittel entspricht ca. 1,5 sec Folgeabstand

| # | | | Zeitlücke | Kriterium | schlecht — Note — excellent | Anmerkung |
|---|---|---|---|---|---|---|
| 1 | Folgefahrt Geradeaus | Folgefahrt Geradeaus mit 50 km/h gleichmäßig | Mittel | Regelung Abstand | 1 2 3 4 5 6 7 8 9 10 | |
| 2 | | Folgefahrt Geradeaus mit 50 km/h gleichmäßig | Klein | Regelung Abstand | 1 2 3 4 5 6 7 8 9 10 | |
| 3 | | Folgefahrt Geradeaus mit 50 km/h gleichmäßig | Groß | Regelung Abstand | 1 2 3 4 5 6 7 8 9 10 | |
| 4 | | Folgefahrt Geradeaus mit 50 km/h- Verringerung Zeitlücke | Groß ->Mittel | Einregel-vorgang | 1 2 3 4 5 6 7 8 9 10 | Bew. Dauer Einregelung |
| 5 | | Folgefahrt Geradeaus mit 50 km/h- Erhöhung Zeitlücke | Mittel ->Groß | Einregel-vorgang | 1 2 3 4 5 6 7 8 9 10 | Bew. Dauer Einregelung |
| 6 | | Folgefahrt Geradeaus mit 70 km/h gleichmäßig | Mittel | Regelung Abstand | 1 2 3 4 5 6 7 8 9 10 | |
| 7 | Folgefahrt Kurve | Folgefahrt durch Kurve mit 30 km/h gleichmäßig | Mittel | Regelung Abstand | 1 2 3 4 5 6 7 8 9 10 | |
| 8 | Vorderfahr-zeug Sinusfahrt | Folgefahrt mit ca. 50 km/h und Vorrausfahrzeug fährt ungleich-mäßig (~Sinusform +/- 10km/h) | Mittel | Regelung Abstand | 1 2 3 4 5 6 7 8 9 10 | |
| 9 | | | | Brems-ungen | 1 2 3 4 5 6 7 8 9 10 | |
| 10 | | | | Beschleu-nigungen | 1 2 3 4 5 6 7 8 9 10 | |
| 11 | | Folgefahrt mit ca. 50 km/h und Vorrausfahrzeug fährt ungleich-mäßig (~Sinusform +/- 10km/h) | Klein | Regelung Abstand | 1 2 3 4 5 6 7 8 9 10 | |
| 12 | | | | Brems-ungen | 1 2 3 4 5 6 7 8 9 10 | |
| 13 | | | | Beschleu-nigungen | 1 2 3 4 5 6 7 8 9 10 | |
| 14 | | Folgefahrt mit ca. 50 km/h und Vorrausfahrzeug fährt ungleich-mäßig (~Sinusform +/- 10km/h) | Groß | Regelung Abstand | 1 2 3 4 5 6 7 8 9 10 | |
| 15 | | | | Brems-ungen | 1 2 3 4 5 6 7 8 9 10 | |
| 16 | | | | Beschleu-nigungen | 1 2 3 4 5 6 7 8 9 10 | |

# Fig. 17

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011121537 A1
- DE 102012002333 A1
- DE 102012201896 A1
- DE 102012001666 A1
- DE 102011087781 A1
- DE 102011000409 A1
- WO 2012088635 A1
- EP 0836945 A1